# EUROPÄISCHE PATENTSCHRIFT

(11) **EP 1 861 633 B1**
(45) Veröffentlichungstag und Bekanntmachung des Hinweises auf die Patenterteilung: **29.06.2011**
(21) Anmeldenummer: 06723451.8
(22) Anmeldetag: 15.03.2006
(51) Int. Cl.: F16H 3/66

(54) **MEHRSTUFENGETRIEBE**
MULTI-STEP TRANSMISSION
DEMULTIPLICATEUR A PLUSIEURS ETAGES

(30) Priorität: 23.03.2005 DE 102005013382
(43) Veröffentlichungstag der Anmeldung: 05.12.2007
(73) Patentinhaber: ZF Friedrichshafen AG, 88038 Friedrichshafen (DE)
(72) Erfinder: DIOSI, Gabor, 88045 Friedrichshafen (DE); HAUPT, Josef, 88069 Tettnang (DE); ZIEMER, Peter, 88069 Tettnang (DE); BREHMER, Martin, 78467 Konstanz (DE)
(86) Internationale Anmeldenummer: PCT/EP2006/002381
(87) Internationale Veröffentlichungsnummer: WO 2006/099981

(56) Entgegenhaltungen:
- EP-A- 1 398 537
- DE-A1- 19 949 507
- US-A- 4 224 838
- US-A1- 2004 242 368

## Beschreibung

Die vorliegende Erfindung betrifft ein Mehrstufengetriebe in Planetenbauweise insbesondere ein Automatgetriebe für ein Kraftfahrzeug, gemäß dem Oberbegriff des Patentanspruchs 1.

Automatgetriebe, insbesondere für Kraftfahrzeuge, umfassen nach dem Stand der Technik Planetenradsätze, die mittels Reibungs- bzw. Schaltelementen, wie etwa Kupplungen und Bremsen geschaltet werden und üblicherveise mit einem einer Schlupfwirkung unterliegenden und wahlweise mit einer Überbrückungskupplung versehenen Anfahrelement, wie etwa einem hydrodynamischen Drehmomentwandler oder einer Strömungskupplung verbunden sind.

Ein derartiges Mehrgang-Automatgetriebe geht beispielsweise aus der DE 102 13 820 A1 hervor. Es umfasst im Wesentlichen eine Antriebswelle und eine Abtriebswelle, die koaxial zueinander angeordnet sind, insgesamt drei Planetenradsätze und sechs Reibschaltelemente. Zur Übertragung der Drehzahl der Antriebswelle auf die Abtriebswelle weist das Getriebe zwei Leistungspfade auf. Zwei der Planetenradsätze bilden einen schaltbaren Hauptradsatz des Getriebes in Form eines Zweisteg-Vierwellen-Planetengetriebes, konstruktiv ausgeführt beispielsweise als ein so genannter Ravigneaux-Planetenradsatz oder als ein so genannter Simpson-Planetenradsatz. Das Ausgangselement des Hauptradsatzes ist mit der Abtriebswelle des Getriebes verbunden. Der verbleibende der drei Planetenradsätze ist als einfacher Planetenradsatz ausgeführt und bildet einen nicht schaltbaren Vorschaltradsatz, der mit der Antriebswelle fest verbunden ist und ausgangsseitig zwei Drehzahlen erzeugt, die neben der Drehzahl der Antriebswelle auf verschiedene Eingangselemente des Hauptradsatzes übertragbar ist. Durch selektives Sperren von jeweils zwei der sechs als Kupplungen und Bremsen ausgeführten Reibschaltelemente sind insgesamt acht Vorwärtsgänge gruppenschaltungsfrei schaltbar, also derart schaltbar, dass bei einem Wechsel von einem Gang in den nachfolgend höheren oder niedrigeren Gang jeweils nur eines der zuvor geschlossenen Schaltelemente geöffnet und ein zuvor offenes Schaltelement geschlossen wird.

Ein axial vergleichsweise kompakt bauendes Mehrstufen-Automatgetriebe mit einem Vorschaltsatz und einem aus zwei in Art eines Zweisteg-Vierwellen-Planetengetriebes miteinander gekoppelten Planetenradsätzen bestehenden Hauptradsatz ist beispielsweise aus US 5,429,557 bekannt. In einer besonders gut für den Einbau in ein Fahrzeug mit so genanntem Front-Quer-Antrieb geeigneten Ausgestaltung dieses Getriebes sind Antriebs- und Abtriebswelle der Getriebes achsparallel zueinander angeordnet, der Vorschaltsatz in Vorgelegebauweise mit zwei Stirnradstufen konstanter Übersetzung mit Overdrive-Charakteristik ausgebildet, und die beiden Planetenradsätze des Hauptradsatz radial ineinandergeschachtelt achsparallel zur Antriebswelle des Getriebes angeordnet. Unter Verwendung von insgesamt fünf Reibschaltelementen sind hierbei allerdings nur sechs Vorwärtsgänge gruppenschaltungsfrei schaltbar.

Des weiteren ist aus der DE 199 49 507 A1 der Anmelderin ein Mehrstufengetriebe bekannt, bei dem an der Antriebswelle zwei nicht schaltbare Vorschaltplanetenradsätze vorgesehen sind, die ausgangsseitig zwei Drehzahlen erzeugen, die neben der Drehzahl der Antriebswelle wahlweise auf verschiedene Eingangselemente eines auf die Abtriebswelle wirkenden, schaltbaren, mehrgliedrigen Hauptradsatzes durch selektives Schließen der verwendeten Schaltelemente derart schaltbar sind, dass zum Umschalten von einem Gang in den jeweils nächstfolgenden höheren oder niedrigeren Gang von den beiden gerade betätigten Schaltelementen jeweils nur ein Schaltelement zu-oder abgeschaltet werden muss. Der Hauptradsatz ist wiederum als Zweisteg-Vierwellen-Planetenradsatz ausgebildet, dessen beide Planetenradsätze über zwei Elemente fest miteinander gekoppelt sind. Unter Verwendung von fünf Schaltelementen sind dabei sieben Vorwärtsgänge gruppenschaltungsfrei schaltbar, unter Verwendung von sechs Schaltelementen sogar neun oder zehn Vorwärtsgänge. Alle vier Planetenradsätze sind koaxial zueinander und koaxial zur Antriedswelle angeordnet.

Im Rahmen der DE 101 15 983 A1 der Anmelderin wird ein Mehrstufengetriebe beschrieben, mit einer Antriebswelle, die mit einem Vorschaltsatz verbunden ist, mit einer Abtriebswelle, die mit einem Nachschaltsatz verbunden ist, und mit maximal sieben Schaltelementen, durch deren wahlweises Schalten mindestens acht Vorwärtsgänge ohne Gruppenschaltung schaltbar sind. Der Vorschaltsatz wird aus einem schaltbaren oder nicht schaltbaren Planetenradsatz oder aus maximal zwei nicht schaltbaren, miteinander gekoppelten Planetenradsätzen gebildet. Der Nachschaltsatz ist als Zweisteg-Vierwellen-Getriebe mit zwei schaltbaren Nachschalt-Planetenradsätzen ausgebildet und weist vier freie Wellen auf. Die erste freie Welle dieses Zweisteg-Vierwellen-Getriebes ist mit dem ersten Schaltelement verbunden, die zweite freie Welle mit dem zweiten und dritten Schaltelement, die dritte freie Welle mit dem vierten und fünften Schaltelement und die vierte freie Welle ist mit der Abtriebswelle verbunden. Für ein Mehrstufengetriebe mit insgesamt sechs Schaltelementen wird erfindungsgemäß vorgeschlagen, die dritte freie Welle oder die erste freie Welle des Nachschaltsatzes zusätzlich mit einem sechsten Schaltelement zu verbinden. Für ein Mehrstufengetriebe mit insgesamt sieben Schaltelementen wird erfindungsgemäß vorgeschlagen, die dritte freie Welle zusätzlich mit einem sechsten Schaltelement und die erste freie Welle zusätzlich mit einem siebten Schaltelement zu verbinden. Auch hier sind alle Planetenradsätze des Getriebes koaxial zueinander angeordnet.

Mehrere andere Mehrstufengetriebe sind beispielsweise auch aus der DE 101 15 995 A1 der Anmelderin bekannt, bei denen vier schaltbare, miteinander gekoppelte und koaxial zueinander angeordnete Planetenradsätze und sechs oder sieben reibschlüssige Schaltelemente vorgesehen sind, durch deren selektives Schließen eine Drehzahl einer Antriebswelle des Getriebes derart auf eine Abtriebswelle des Getriebes übertragbar ist, dass neun oder elf Vorwärtsgänge und zumindest eine Rückwärtsgang schaltbar sind. Je nach Getriebeschema sind in jedem Gang zwei oder drei Schaltelemente geschlossen, wobei bei einem Wechsel von einem Gang in den jeweils nächstfolgend höheren oder nächstfolgend niedrigeren Gang zur Vermeidung von Gruppenschaltungen jeweils nur ein geschlossenes Schaltelement geöffnet und ein zuvor nicht geschlossenes Schaltelement zugeschaltet wird.

Der vorliegenden Erfindung liegt die Aufgabe zugrunde, ein Mehrstufengetriebe der eingangs genannten Art mit zumindest acht Vorwärtsgängen und zumindest einem Rückwärtsgang vorzuschlagen, bei dem unter Verwendung von insgesamt vier Planetenradsätzen eine möglichst geringe Anzahl an Schaltelementen benötigt wird. Dabei sollen alle Vorwärtsgänge bei sequentieller Schaltweise gruppenschaltungsfrei schaltbar sein, d.h. bei einem Wechsel von einem Vorwärtsgang in den nachfolgend höheren oder in den nachfolgend niedrigeren Vorwärtsgang soll jeweils nur ein zuvor geschlossenes Schaltelement geöffnet und ein zuvor nicht geöffnetes Schaltelement geschlossen werden. Zudem soll das Getriebe eine große Spreizung bei vergleichsweise harmonischer Gangabstufung aufweisen und in den Hauptfahrgängen einen günstigen Wirkungsgrad - also vergleichsweise geringe Schlepp- und Verzahnungsverluste - aufweisen. Das Getriebe soll speziell auch für die Anwendung mit nicht koaxialem An- und Abtrieb des Getriebes geeignet sein, entsprechend soll die axiale Baulänge des Getriebes möglichst klein sein.

Diese Aufgabe wird erfindungsgemäß durch ein Mehrstufengetriebe mit den Merkmalen des Patentanspruchs 1 gelöst. Weitere vorteilhafte Ausgestaltungen und Weiterbildungen gehen aus den Unteransprüchen hervor.

Demnach wird ein erfindungsgemäßes Mehrstufengetriebe in Planetenbauweise vorgeschlagen, welches eine Antriebswelle, eine Abtriebswelle, vier Planetenradsätze, mindestens acht drehbare Wellen sowie fünf Schaltelemente zwei Bremsen und drei Kupplungen- aufweist, deren selektives Eingreifen verschiedene Übersetzungsverhältnisse zwischen der Antriebswelle und der Abtriebswelle bewirkt, so dass acht Vorwärtsgänge und ein Rückwärtsgang realisierbar sind.

Dabei sind ein Steg des vierten Planetenradsatzes und die Antriebswelle verdrehfest miteinander verbunden und bilden die erste drehbare Welle des Getriebes. Ein Steg des dritten Planetenradsatzes und die Abtriebswelle sind miteinander verbunden und bilden die zweite drehbare Welle des Getriebes, wobei zwischen diesem Steg des dritten Planetenradsatzes und der Abtriebswelle ein Stirn- oder Kettentrieb und ein Differential kinematisch zwischengeschaltet sein können. Ein Sonnenrad des ersten Planetenradsatzes und ein Sonnenrad des vierten Planetenradsatzes sind verdrehfest miteinander verbunden und bilden die dritte drehbare Welle des Getriebes. Ein Hohlrad des ersten Planetenradsatzes bildet die vierte drehbare Welle des Getriebes. Ein Hohlrad des zweiten Planetenradsatzes und ein Sonnenrad des dritten Planetenradsatzes sind verdrehfest miteinander verbunden und bilden die fünfte drehbare Welle des Getriebes. Ein Steg des ersten Planetenradsatzes und ein Hohlrad des dritten Planetenradsatzes sind verdrehfest miteinander verbunden und bilden die sechste drehbare Welle des Getriebes. Ein Sonnenrad des zweiten Planetenradsatzes und ein Hohlrad des vierten Planetenradsatzes sind verdrehfest miteinander verbunden und bilden die siebte drehbare Welle des Getriebes. Ein Steg des zweiten Planetenradsatzes bildet die achte drehbare Welle des Getriebes.

Hinsichtlich der Anbindung der fünf Schaltelemente an die verschiedenen Elemente des Planetenradsätze und an die Antriebswelle des Getriebes ist vorgesehen, dass das erste Schaltelement im Kraftfluss zwischen der dritten Welle und einem Gehäuse des Getriebes angeordnet ist, dass das zweite Schaltelement im Kraftfluss zwischen der vierten Welle und dem Gehäuse des Getriebes angeordnet ist, und dass das dritte Schaltelement im Kraftfluss zwischen der fünften und der ersten Welle angeordnet ist. Weiterhin ist gemäß der Erfindung das vierte Schaltelement im Kraftfluss entweder zwischen der achten und der zweiten Welle oder aber zwischen der achten und der sechsten Welle angeordnet. Das fünfte Schaltelement ist gemäß der Erfindung zum Verblocken des zweiten Planetenradsatzes vorgesehen und ist dazu im Kraftfluss entweder zwischen der siebten und der fünften Welle oder aber zwischen der siebten und der achten Welle oder aber zwischen der fünften und der achten Welle angeordnet. Durch diese verschiedenen kinematischen Kopplungen der Schaltelemente an die verschiedenen Wellen des Getriebes ergibt sich erfindungsgemäß somit hinsichtlich der kinematischen Bauteilkopplung eine ganze Getriebefamilie.

Der erste Vorwärtsgang durch Schließen des ersten, zweiten und dritten Schaltelementes, der zweite Vorwärtsgang durch Schließen des ersten, zweiten und fünften Schaltelementes, der dritte Vorwärtsgang durch Schließen des zweiten, dritten und fünften Schaltelementes, der vierte Vorwärtsgang durch Schließen des zweiten, vierten und fünften Schaltelementes, der fünfte Vorwärtsgang durch Schließen des zweiten, dritten und vierten Schaltelementes, der sechste Vorwärtsgang durch Schließen des dritten, vierten und fünften Schaltelementes, der siebte Vorwärtsgang durch Schließen des ersten, dritten und vierten Schaltelementes und der achte Vorwärtsgang durch Schließen des ersten, vierten und fünften Schaltelementes. Ein Rückwärtsgang ergibt sich durch Schließen des ersten, zweiten und vierten Schaltelementes.

Dieses Radsatzschema ist Gegenstand der nicht vorveröffentlichten Patentanmeldung DE 102005002337.1 der Anmelderin. Der Beschreibungsinhalt der DE 102005002337.1 soll ausdrücklich auch Bestandteil der vorliegenden Erfindung sein.

Erfindungsgemäß ist hinsichtlich der räumlichen Anordnung der vier Planetenradsätze im Gehäuse des Getriebes vorgesehen, dass der zweite und vierte Planetenradsatz in axialer Richtung gesehen in einer Ebene radial übereinander angeordnet bzw. radial ineinandergeschachtelt sind. Dabei ist der vierte Planetenradsatz zentrisch innerhalb des zweiten Planetenradsatzes angeordnet, wobei das Hohlrad des (radial inneren) vierten Planetenradsatzes gleichzeitig das Sonnenrad des (radial äußeren) zweiten Planetenradsatzes bildet. Weiterhin ist gemäß der Erfindung vorgesehen, dass diese beiden radial ineinandergeschachtelten Planetenradsätze räumlich gesehen axial zwischen den anderen beiden Planetenradsätzen angeordnet sind.

Alle vier Planetenradsätze sind vorzugsweise als so genannte Minus-Planetenradsätze ausgeführt, deren jeweilige Planetenräder mit Sonnenrad und Hohlrad des jeweiligen Planetenradsatzes kämmen. Entsprechend der erfindungsgemäßen kinematischen Kopplung der Radsatzelemente, Schaltelemente, Antriebswelle und Abtriebswelle ergibt sich eine günstige Gangabstufung erst bei einer-speziellen Kombination der Standgetriebeübersetzungen der einzelnen Planetenradsätze. Erst dadurch, dass im vorliegenden Fall die Standübersetzung des zweiten Planetenradsatzes betragsmäßig hinreichend klein und gleichzeitig die Standübersetzung des vierten Planetenradsatzes betragsmäßig hinreichend groß ist, ist die Voraussetzung für die erfindungsgemäße radiale Verschachtelung des zweiten und vierten Planetenradsatzes gegeben: Die Standübersetzung des zweiten Planetenradsatzes im Bereich von minus 1,6 ermöglicht ein Sonnenrad mit vergleichsweise großem Durchmesser, ohne dass die Planetenräder des (radial äußeren) zweiten Planetenradsatzes mit zu hohen Drehzahlen rotieren; die Standübersetzung des vierten Planetenradsatzes im Bereich von minus 2,0 ermöglicht ein Hohlrad mit vergleichsweise kleinem Durchmesser, ohne dass das Sonnenrad des (radial inneren) vierten Planetenradsatzes vom Durchmesser her zu klein wird, um die geforderten-Drehmemente übertragen zu können. Dadurch, dass das Hohlrad des (radial inneren) vierten Planetenradsatzes direkt mit dem Sonnenrad des (radial äußeren) zweiten Planetenradsatzes verbunden ist, können dieses Hohlrad und dieses Sonnenrad auch zu einem einzigen Bauelement zusammengefasst werden, wodurch sich der radiale Bauraum dieser aus dem zweiten und vierten Planetenradsatz gebildeten Radsatz-Baugruppe weiter reduziert.

Die Lagerung der beiden radial ineinandergeschachtelten Planetenradsätzen kann konstruktiv vergleichsweise einfach realisiert werden. So kann beispielsweise der Steg des radial inneren vierten Planetenradsatzes der Radsatz-Baugruppe über die Antriebswelle bzw. die erste Welle des Getriebes radial an dem Getriebegehäuse bzw. radial an einer getriebegehäusefesten Nabe oder radial in der dritten Welle des Getriebes gelagert sein. Der Steg des radial äußeren zweiten Planetenradsatzes der Radsatz-Baugruppe kann beispielsweise radial auf der dritten Welle des Getriebes gelagert sein.

Durch die Verwendung von nur fünf Schaltelementen in Verbindung mit der erfindungsgemäßen Anordnung und Verschachtelung der vier Planetenradsätze wird ein für ein 8-Gang-Automatgetriebe mit vier einzelnen gang-bildenden Planetenradsätzen eine außerordentlich kurze axial Baulänge des Getriebes erzielt. Der Baulängenbedarf der vier Planetenradsätze ist hierbei nicht größer als der Baulängenbedarf für drei axial nebeneinander angeordneten Einzel-Planetenradsätze. Insofern ist das erfindungsgemäße Automatgetriebe besonders gut geeignet für den Einbau in ein Fahrzeug mit quer zur Fahrtrichtung eingebautem Antriebsmotor und achsparallelem An- und Abtrieb.

Durch die erfindungsgemäße Ausgestaltung des Mehrstufengetriebes ergeben sich insbesondere für Personenkraftwagen geeignete Übersetzungen mit großer Gesamtspreizung in harmonischer Gangabstufung, wodurch ein guter Fahrkomfort und eine signifikante Verbrauchsabsenkung erzielt werden.

Darüber hinaus wird mit dem erfindungsgemäßen Mehrstufengetriebe durch eine geringe Anzahl an Schaltelementen, nämlich zwei Bremsen und drei Kupplungen, der Bauaufwand vergleichsweise gering. In vorteilhafter Weise ist es mit dem erfindungsgemäßen Mehrstufengetriebe möglich, ein Anfahren mit einem hydrodynamischen Wandler, einer externen Anfahrkupplung oder auch mit sonstigen geeigneten externen Anfahrelementen durchzuführen. Es ist auch denkbar, einen Anfahrvorgang mit einem im Getriebe integrierten Anfahrelement zu ermöglichen. Vorzugsweise eignet sich hierfür eine der beiden Bremsen, die im ersten und zweiten Vorwärtsgang und im Rückwärtsgang betätigt wird.

Darüber hinaus ergibt sich bei dem erfindungsgemäßen Mehrstufengetriebe ein guter Wirkungsgrad in allen Gängen einerseits infolge geringer Schleppverluste, da in jedem Gang jeweils nur zwei Schaltelemente nicht im Eingriff sind, andererseits auch infolge geringer Verzahnungsverluste in den einfach aufgebauten Einzel-Planetenradsätzen.

Außerdem ist das erfindungsgemäße Mehrstufengetriebe derart konzipiert, dass eine Anpassbarkeit an unterschiedliche Triebstrangausgestaltungen sowohl in Kraftflussrichtung als auch in räumlicher Hinsicht ermöglicht wird. So ist es beispielsweise ohne besondere konstruktive Maßnahmen möglich, Antrieb und Abtrieb des Getriebes wahlweise achsparallel oder koaxial zueinander anzuordnen.

In Verbindung mit der erfindungsgemäßen räumlichen Anordnung der vier Planetenradsätze relativ zueinander ist es zweckmäßig, das erste und zweite Schaltelement räumlich gesehen in einem Bereich nahe dem ersten Planetenradsatz anzuordnen. Vorzugsweise ist das zweite Schaltelement dabei räumlich gesehen in einem Bereich radial über dem ersten planetenradssatz angeordnet und das erste Schaltelement in einem Bereich axial neben dem ersten Planetenradsatz auf dessen der radial ineinandergeschachtelten Radsatzgruppe abgewandte Seite.

In Verbindung mit der erfindungsgemäßen räumlichen Anordnung der vier Planetenradsätze relativ zueinander ist es zweckmäßig, das dritte und fünfte Schaltelement räumlich gesehen in einem Bereich axial zwischen dem dritten Planetenradsatz und der radial ineinandergeschachtelten Radsatzgruppe anzuordnen. Das vierte Schaltelement kann räumlich gesehen wahlweise in einem Bereich axial zwischen dem dritten Planetenradsatz und der radial ineinandergeschachtelten Radsatzgruppe oder aber in einem Bereich axial zwischen der radial ineinandergeschachtelten Radsatzgruppe und dem ersten Planetenradsatz oder aber in einem Bereich radial über der radial ineinandergeschachtelten Radsatzgruppe angeordnet sein.

Die Erfindung wird im Folgenden anhand der Zeichnungen beispielhaft näher erläutert. Gleiche bzw. vergleichbare Bauteile sind dabei auch mit gleichen Bezugszeichen versehen. Es zeigen:
- Figur 1: eine schematische Darstellung eines ersten Ausführungs- beispiels eines erfindungsgemäßen Mehrstufengetriebes;
- Figur 2: eine schematische Darstellung eines zweiten Ausführungs- beispiels eines erfindungsgemäßen Mehrstufengetriebes;
- Figur 3: eine schematische Darstellung eines dritten Ausführungs- beispiels eines erfindungsgemäßen Mehrstufengetriebes;
- Figur 4: eine schematische Darstellung eines vierten Ausführungs- beispiels eines erfindungsgemäßen Mehrstufengetriebes;
- Figur 5: eine schematische Darstellung eines fünften Ausführungs- beispiels eines erfindungsgemäßen Mehrstufengetriebes;
- Figur 6: eine schsmatische Darstellung eines sechsten Ausfüh- rungsbeispiels eines erfindungsgemäßen Mehrstufen- getriebes;
- Figur 7: ein beispielhaftes Schaltschema für die Mehrstufengetriebe gemäß der Figuren 1 bis 6;
- Figur 8: eine beispielhafte erste Bauteilanordnungs-Variante für das Mehrstufengetriebe gemäß Figur 1;
- Figur 9: eine beispielhafte zweite Bauteilanordnungs Variante für das Mehrstufengetriebe gemäß Figur
- Figur 10: eine beispielhafte dritte Bauteilanordnungs-Variante für das Mehrstufengetriebe gemäß Figur 1; und
- Figur 11: ein beispielhafte Detail-Konstruktion.

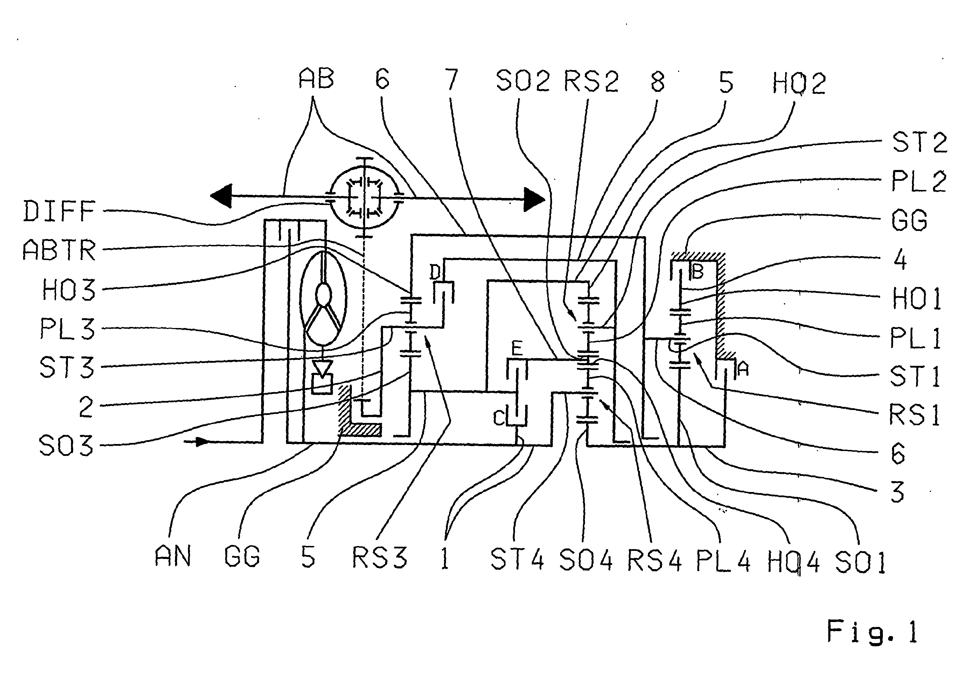

In Figur 1 ist ein erstes Ausführungsbeispiel eines erfindungsgemäßen Mehrstufengetriebes dargestellt. Das Getriebe umfasst eine Antriebswelle AN, und eine Abtriebswelle AB, sowie vier Planetenradsätze RS1, RS2, RS3, RS4 und fünf Schaltelemente A, B, C, D, E, die alle in einem Gehäuse GG des Getriebes angeordnet sind. Alle vier Planetenradsätze RS1, RS2, RS3, RS4 sind als Minus-Planetenradsätze ausgebildet. Ein Minus-Planetenradsatz weist bekanntlich Planetenräder auf, die mit Sonnen- und Hohlrad dieses Planetensatzes kämmen. Die Hohlräder der vier Planetenradsätze RS1, RS2, RS3, RS4 sind mit HO1, HO2, HO3 und HO4 bezeichnet, die Sonnenräder mit SO1, S02, S03 und S04, die Planetenräder mit PL1, PL2, PL3 und PL4, und die Stege, an denen die genannten Planetenräder rotierbar gelagert sind, mit ST1, ST2, ST3 und ST4. Die Schaltelemente A und B sind als Bremsen ausgebildet, die im dargestellten Ausführungsbeispiel beide als reibschlüssig schaltbare Lamellenbremse ausgeführt sind, selbstverständlich in einer anderen Ausgestaltung auch als reibschlüssig schaltbare Bandbremse oder beispielsweise auch als formschlüssig schaltbare Klauen- oder Konusbremse ausgeführt sein können. Die Schaltelemente C, D und E sind als Kupplungen ausgebildet, die im dargestellten Ausführungsbeispiehel alle als reibschlüssig schaltbare Lamellenkupplung ausgeführt sind, selbstverständlich in einer anderen Ausgestaltung beispielsweise auch als formschlüssig schaltbare Klauen- oder Konuskupplung ausgeführt sein können.

Mit diesen fünf Schaltelementen A bis E ist ein selektives Schalten von acht Vorwärtsgängen und zumindest einem Rückwärtsgang realisierbar. Das erfindungsgemäße Mehrstufengetriebe weist insgesamt zumindest acht drehbare Wellen auf, die mit 1 bis 8 bezeichnet sind.

Hinsichtlich der kinematischen Kopplung der einzelnen Elemente der vier Planetenradsätze RS1, RS2, RS3, RS4 untereinander und zur Antriebs-und Abtriebswelle AN, AB ist bei dem Mehrstufengetriebe gemäß Figur 1 folgendes vorgesehen: Der Steg ST4 des vierten Planetenradsatzes RS4 und die Antriebswelle AN sind verdrehfest miteinander verbunden und bilden die erste Welle 1 des Getriebes. Der Steg ST3 des dritten Planetenradsatzes RS3 und die Abtriebswelle AB sind miteinander verbunden und bilden die zweite Welle 2 des Getriebes, wobei zwischen diesem Steg ST3 und der Abtriebswelle AB eine als Kettentrieb oder als Stimtrieb ausgebildete Abtriebsstufe ABTR und ein Differential DIFF kinematisch zwischengeschaltet sind. Das Sonnenrad SO1 des ersten Planetenradsatzes RS1 und das Sonnenrad S04 des vierten Planetenradsatzes RS4 sind verdrehfest miteinander verbunden und bilden die dritte Welle 3 des Getriebes. Das Hohlrad HO1 des ersten Planetenradsatzes RS1 bildet die vierte Welle 4 des Getriebes. Das Hohlrad H02 des zweiten Planetenradsatzes RS2 und das Sonnenrad S03 des dritten Planetenradsatzes RS3 sind verdrehfest miteinander verbunden und bilden die fünfte Welle 5 des Getriebes. Der Steg ST1 des ersten Planetenradsatzes RS1 und das Hohlrad H03 des dritten Planetenradsatzes RS3 sind verdrehfest miteinander verbunden und bilden die sechste Welle 6 des Getriebes. Das Sonnenrad S02 des zweiten Planetenradsatzes RS2 und das Hohlrad H04 des vierten Planetenradsatzes RS4 sind verdrehfest miteinander verbunder und bilden die siebte Welle 7 des Getriebes. Der Steg ST2 des zweiten Planetenradsatzes RS2 bildet die achte Welle 8 des Getriebes.

Hinsichtlich der Kopplung der fünf Schaltelemente A bis E an die so beschriebenen Wellen 1 bis 8 des Getriebes ist bei dem Mehrstufengetriebe gemäß Figur 1 folgendes vorgesehen: Das erste Schaltelement A ist im Kraftfluss zwischen der dritten Welle 3 und dem Getriebegehäuse GG angeordnet. Das zweite Schaltelement B ist im Kraftfluss zwischen der vierten Welle 4 und dem Getriebegehäuse GG angeordnet. Das dritte Schaltelement C ist im Kraftfluss zwischen der fünften Welle 5 und der ersten Welle 1 angeordnet. Das vierte Schaltelement D ist im Kraftfluss zwischen der achten Welle 8 und der zweiten Welle 2 angeordnet ist. Das fünfte Schaltelement E schließlich ist im Kraftfluss zwischen der siebten Welle 7 und der fünften Welle 5 angeordnet. Ist das fünfte Schaltelement E geschlossen, so ist der zweite Planetenradsatzes RS2 in sich verblockt, d.h. Sonnenrad S02 und Hohlrad H02 des zweiten Planetenradsatzes RS2 rotieren mit gleicher Drehzahl.

In dem in Figur 1 dargestellten Ausführungsbeispiel ist der dritte Planetenradsatz RS3 auf der dem Antrieb des Getriebes zugewandten Seite des Getriebes und der erste Planetenradsatz RS1 auf der dem Antrieb des Getriebes gegenüberliegenden Seite des Getriebes angeordnet, wobei Antriebswelle AN und Abtriebswelle AB des Getriebes beispielhaft achsparallel zueinander angeordnet sind. Der zweite und vierte Planetenradsatz RS2, RS4 sind in axialer Richtung gesehen in einer Ebene radial übereinander angeordnet bzw. radial ineinandergeschachtelt, derart, dass der vierte Planetenradsatz RS4 zentrisch innerhalb des zweiten Planetenradsatzes RS2 angeordnet ist. Dabei bildet das Hohlrad H04 des radial inneren Planetenradsatzes RS4 gleichzeitig das Sonnenrad S02 des radial äußeren Planetenradsatzes RS2. Die Radsatzgruppe mit den beiden radial ineinandergeschachtelten Planetenradsätze RS2, RS4 ist räumlich- gesehen in einem- Bereich axial zwischen den anderen beiden Planetenradsätzen RS3, RS1 angeordnet.

Die in Verbindung mit der achsparallelen Anordnung von Antriebs- und Abtriebswelle AN, AB notwendige Abtriebsstufe ABTR (in Bauform eines Kettentrieb oder eines Stirntriebs) ist im dargestellten Beispiel antriebsnah angeordnet, hier beispielhaft räumlich gesehen axial unmittelbar angrenzend an den dritten Planetenradsatz RS3 auf dessen der Radsatzgruppe mit den beiden radial ineinandergeschachtelten Planetenradsätze RS2, RS4 abgewandten Seite. Im dargestellten Ausführungsbeispiel ist diese Abtriebsstufe ABTR zudem räumlich gesehen zwischen dem genannten Planetenradsatz RS3 und einem mit der Antriebswelle AN verbundenem Drehmomentwandler angeordnet, wobei dieser Drehmomentwandler wiederum mit einem in Figur 1 zur Vereinfachung nicht näher dargestelltem Antriebsmotor des Getriebes verbunden ist. Entsprechend wird der dritte Planetenradsatz RS3 nur von der Antriebswelle AN bzw. Welle 1 des Getriebes in axialer Richtung zentrisch durchgriffen, wohingegen die anderen Planetenradsätze RS1 und RS4 von keiner Welle des Getriebes in axialer Richtung zentrisch durchgriffen werden. Selbstverständlich kann in einer anderen Ausgestaltung des Getriebes vorgesehen sein, dass der Antriebsmotor des Getriebes auf der Seite des Getriebes angeordnet ist, an der auch der erste Planetenradsatz RS1 angeordnet ist, wobei in diesem Fall dann die Abtriebsstufe ABTR auf der dem Antrieb gegenüberliegenden Seite des Getriebes angeordnet ist, der erste und vierte Planetenradsatz RS1, RS4 von der Antriebswelle AN bzw. der Welle 1 in axialer Richtung zentrisch durchgriffen werden und der dritte Planetenradsatz RS3 von keiner Welle in axialer Richtung zentrisch durchgriffen wird.

Wie in Figur 1 weiterhin ersichtlich, sind die beiden Bremsen A, B räumlich gesehen in einem Bereich nahe dem ersten Planetenradsatz RS1 angeordnet. In dem dargestellten Ausführungsbeispiel ist die Bremse B - insbesondere ein Lamellenpaket der Bremse B dabei räumlich gesehen zumindest teilweise radial über dem ersten Planetenradsatz RS1 angeordnet. Die Bremse A ist räumlich gesehen auf der Seite des ersten Planetenradsatzes RS1 angeordnet ist, die dem zweiten bzw. vierten Planetenradsatz RS2, RS4 gegenüberliegt, dabei unmittelbar angrenzend an den ersten Planetenradsatz RS1. Ein Lamellenpaket der Bremse A ist beispielhaft auf einem kleineren Durchmesser angeordnet als das Lamellenpaket der Bremse B. Abweichend von der Darstellung in Figur 1 kann insbesondere die Bremse B auch als Bandbremse ausgebildet sein. In Figur 1 zur Vereinfachung nicht näher dargestellte Servoeinrichtungen der beiden Bremsen A und B zur Betätigung des jeweiligen Lamellenpaketes der Bremse A bzw. B können beispielsweise in konstruktiv einfacher Weise in dem Getriebegehäuse GG bzw. der dem ersten Planetenradsatz RS1 benachbarten Gehäusewand des Getriebegehäuses GG integriert sein.

Wie in Figur 1 weiterhin ersichtlich, sind die Kupplungen C und E räumlich gesehen in einem Bereich axial zwischen dem dritten Planetenradsatz RS3 und den beiden radial ineinander verschachtelten Planetenradsätzen RS2, RS4 angeordnet. In dem dargestellten Ausführungsbeispiel sind die Kupplungen C, E radial betrachtet im Wesentlichen übereinander angeordnet sind, wobei ein Lamellenpaket der Kupplung E auf einem größeren Durchmesser angeordnet ist als ein Lamellenpaket der Kupplung C. Zudem ist das Lamellenpaket der Kupplung E im wesentlichen radial über diesem Lamellenpaket der Kupplung C angeordnet, was die konstruktive Ausbildung eines für beide Kupplungen C, E gemeinsamen Lamellenträgers erleichtert. Im dargestellten Ausführungsbeispiel ist dieser gemeinsame Lamellenträger als Außenlamellenträger vorzugsweise zur Aufnahme von Stahllamellen des Lamellenpaketes der Kupplung C und als Innenlamellenträger vorzugsweise zur Aufnahme von Stahllamellen des Lamellenpaketes der Kupplung E ausgebildet. Entsprechend weist die Welle 7 einen Abschnitt auf, der als Außenlamellenträger vorzugsweise zur Aufnahme von Belaglamellen des Lamellenpaketes der Kupplung E ausgebildet ist. Und entsprechend weist die Welle 1 einen Abschnitt auf, der als Innenlamellenträger zur Aufnahme vorzugsweise von Belaglamellen des Lamellenpaketes der Kupplung C ausgebildet ist. Eine in Figur 1 zur Vereinfachung nicht näher dargestellte Servoeinrichtung der Kupplung C zur Betätigung des Lamellenpaketes der Kupplung C kann beispielsweise in konstruktiv einfacher Weise in dem Innenlamellenträger der Kupplung C axial verschiebbar gelagert sein und hierdurch stets mit Antriebswellendrehzahl rotieren. Entsprechend ist es auch sinnvoll, dass die Servoeinrichtung der Kupplung C einen dynamischen Druckausgleich aufweist. Eine in Figur 1 zur Vereinfachung ebenfalls nicht näher dargestellte Servoeinrichtung der Kupplung E zur Betätigung des Lamellenpaketes der Kupplung E kann beispielsweise in konstruktiv einfacher Weise in dem Außenlamellenträger der Kupplung E axial verschiebbar gelagert sein und hierdurch stets mit Drehzahl der Welle 7 rotieren. Entsprechend ist es auch sinnvoll, dass die Servoeinrichtung der Kupplung E einen dynamischen Druckausgleich aufweist. Eine Druck- und Schmiermittelzufuhr zu den Servoeinrichtungen der Kupplungen C und E kann in konstruktiv einfacher Weise über entsprechende Bohrungen bzw. Kanäle von der Antriebswelle AN her erfolgen.

Wie in Figur 1 weiterhin ersichtlich, ist ein Lamellenpaket der Kuppung D räumlich gesehen axial zwischen dem dritten Planetenradsatz RS3 und den beiden radial ineinander verschachtelten Planetenradsätzen RS2, RS4 angeordnet, dabei unmittelbar angrenzend an den dritten Planetenradsatz RS3. Eine in Figur 1 zur Vereinfachung nicht näher dargestellte Servoeinrichtung der Kupplung D zur Betätigung des Lamellenpaketes der Kupplung D kann beispielsweise in konstruktiv einfacher Weise in dem Außenlamellenträger der Kupplung D axial verschiebbar gelagert sein und hierdurch stets mit Drehzahl der Welle 8 rotieren. Entsprechend ist es auch sinnvoll, dass die Servoeinrichtung der Kupplung D einen dynamischen Druckausgleich aufweist. Räumlich gesehen kann die Servoeinrichtung der Kupplung D unmittelbar benachbart zu dem ihr zugeordneten-lamellenpaket- angeordnet sein. Räumlich gesehen kann die Servoeinrichtung der Kupplung D aber auch zumindest überwiegend auf der dem ersten Planetenradsatz RS1 zugewandten Seite der beiden radial ineinander verschachtelten Planetenradsätze RS2, RS4 angeordnet sein, wobei dann ein auf das Lamellenpaket der Kupplung D wirkendes Betätigungselement dieser Servoeinrichtung den zweiten Planetenradsatz RS2 in axialer Richtung radial übergreift, wenn das Lamellenpaket der Kupplung D beim Schließen axial in Richtung Planetenradsatz RS3 betätigt wird, oder wobei dann ein auf das Lamellenpaket der Kupplung D wirkendes Betätigungselement dieser Servoeinrichtung die Welle 8 in axialer Richtung radial übergreift, wenn das Lamellenpaket der Kupplung D beim Schließen axial in Richtung Planetenradsatz RS4 betätigt wird. Eine Druck- und Schmiermittelzufuhr zu der Servoeinrichtung der Kupplung D kann in konstruktiv einfacher Weise über entsprechende Bohrungen bzw. Kanäle von der Welle 3 her erfolgen.

Aus der in Figur 1 dargestellten beispielhaften räumlichen Anordnung der drei Kupplungen C, D, E ergibt sich, dass
■ die erste Welle 1 abschnittsweise zentrisch innerhalb der fünften Welle 5 und abschnittsweise zentrisch innerhalb der siebten Welle 7 verläuft,
■ die fünfte Welle 5 abschnittsweise zentrisch innerhalb der achten Welle 8 verläuft,
■ die achte Welle 8 zentrisch innerhalb der sechsten Welle 6 verläuft,
■ die fünfte Welle 5 die Kupplungen C und E in axialer und radialer Richtung vollständig umgreift,
■ die sechste Welle 6 den zweiten Planetenradsatz RS2 und die drei Kupplungen C, D, E in axialer und radialer Richtung vollständig übergreift, und
■ die achte Welle 8 den zweiten und vierten Planetenradsatz RS2, RS4 sowie die Kupplungen C und E in axialer und radialer Richtung vollständig übergreift.
Dabei ist die Welle 8 bzw. der Steg ST2 des Planetenradsatzes RS2 beispielhaft, an der als Sonnenwelle ausgebildeten Welle 3 des Getriebes verdrehbar gelagert. Auch die Welle 6 bzw. der Steg ST1 des Planetenradsatzes RS1 ist beispielhaft an dieser Sonnenwelle 3 verdrehbar gelagert. Weiterhin ist in dem in Figur 1 dargestellten Ausführungsbeispiel die Welle 5 bzw. der Steg ST3 des Planetenradsatzes RS3 an der Antriebswelle AN bzw. der Welle 1 verdrehbar gelagert, kann in einer anderen Ausgestaltung selbstverständlich aber auch direkt am Getriebegehäuse GG bzw. einer getriebegehäusefesten Nabe verdrehbar gelagert sein. Weiterhin ist ein mit der Welle 2 verbundenes (angetriebenes) Stim- oder Kettenrad der Abtriebsstufe ABTR beispielhaft am Getriebegehäuse GG bzw. einer getriebegehäusefesten Nabe verdrehbar gelagert.

Sind in einer anderen Ausgestaltung des Getriebes abweichend von der Darstellung in Figur 1 Lamellenpaket und Servoeinrichtung der Kupplung D beispielsweise räumlich gesehen in einem Bereich axial zwischen dem ersten Planetenradsatz RS1 und den beiden radial ineinandergeschachtelten Planetenradsätze RS2, RS4 angeordnet, so übergreift nicht mehr die Welle 8 den zweiten und vierten Planetenradsatz RS2, RS4 und die Kupplungen C, E in axialer und radialer Richtung vollständig, sondern die Welle 2. In noch einer anderen Ausgestaltung des Getriebes kann beispielsweise auch vorgesehen sein, dass das Lamellenpaket der Kupplung D räumlich gesehen zumindest teilweise radial über dem zweiten Planetenradsatz RS2 angeordnet ist, was jedoch voraussetzt, dass ein vergleichsweise großer radialer Einbauraum des Getriebes zur Verfügung steht. In noch einer anderen Ausgestaltung des Getriebes kann beispielsweise auch vorgesehen sein, dass das Lamellenpaket der Kupplung D räumlich gesehen zumindest teilweise radial über dem Lamellenpaket der Kupplung E angeordnet ist.

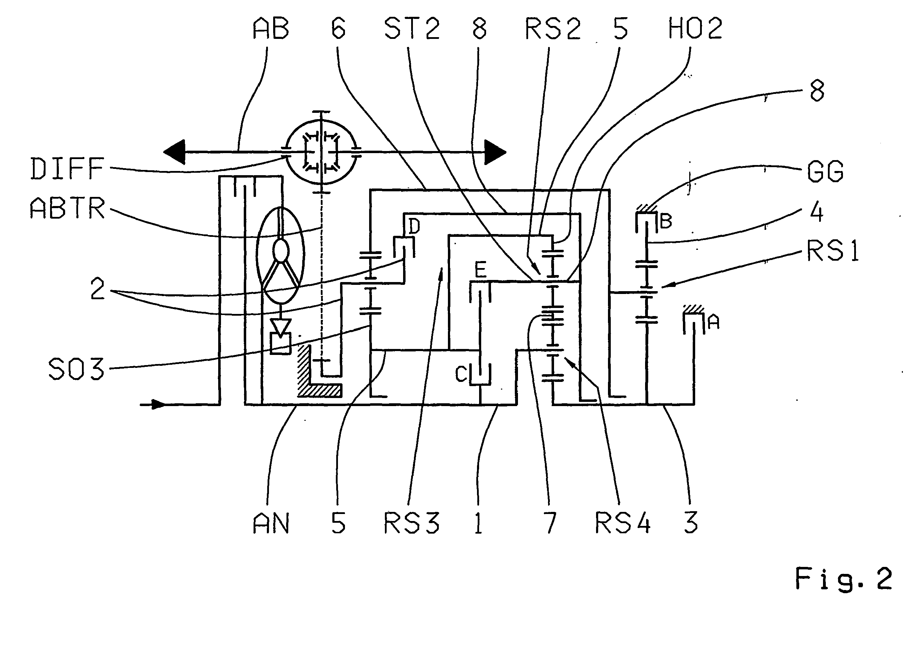

In Figur 2 ist ein zweites Ausführungsbeispiel eines erfindungsgemäßen Mehrstufengetriebes dargestellt, basierend auf dem Radsatzkonzept und der räumlichen Bauteilanordnung des anhand Figur 1 ausführlich beschriebenen ersten Ausführungsbeispiels eines erfindungsgemäßen Mehrstufengetriebes. Der einzige Unterschied zu Figur 1 betrifft die kinematische Anbindung des Kupplung E an den zweiten Planetenradsatz RS2. Im Unterschied zu Figur 1 ist die Kupplung E nunmehr im Kraftfluss zwischen der Welle 5 und der Welle 8 des Getriebes angeordnet. Gemäß Figur 2 sind also die miteinander verbundenen Zentralräder S03 und H02 mittels der Kupplung E mit dem Steg ST2 des zweiten Planetenradsatzes RS2 verbindbar, wobei der zweite Planetenradsatz RS2 bei geschlossener Kupplung E wie in Figur 1 als Block umläuft.

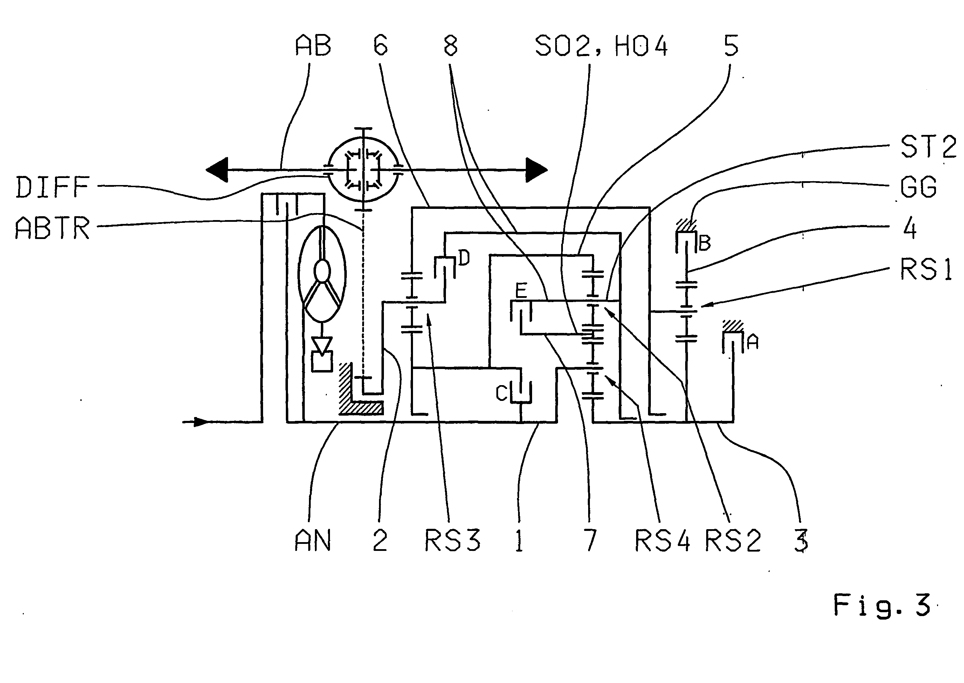

In Figur 3 ist ein drittes Ausführungsbeispiel eines erfindungsgemäßen Mehrstufengetriebes dargestellt, wiederum basierend auf dem Radsatzkonzept und der räumlichen Bauteilanordnung des anhand Figur 1 ausführlich beschriebenen ersten Ausführungsbeispiels eines erfindungsgemäßen Mehrstufengetriebes. Der einzige Unterschied zu Figur 1 betrifft wieder die kinematische Anbindung des Kupplung E an den zweiten Planetenradsatz RS2. Im Unterschied zu Figur 1 und zu Figur 2 ist die Kupplung E nunmehr im Kraftfluss zwischen der Welle 7 und der Welle 8 des Getriebes angeordnet. Gemäß Figur 3 sind also die miteinander verbundenen Zentralräder H04 und S02 mittels der Kupplung E mit dem Steg ST2 des zweiten Planetenradsatzes RS2 verbindbar, wobei der zweite Planetenradsatz RS2 bei geschlossener Kupplung E wie in Figur 1 und wie in Figur 2 als Block umläuft.

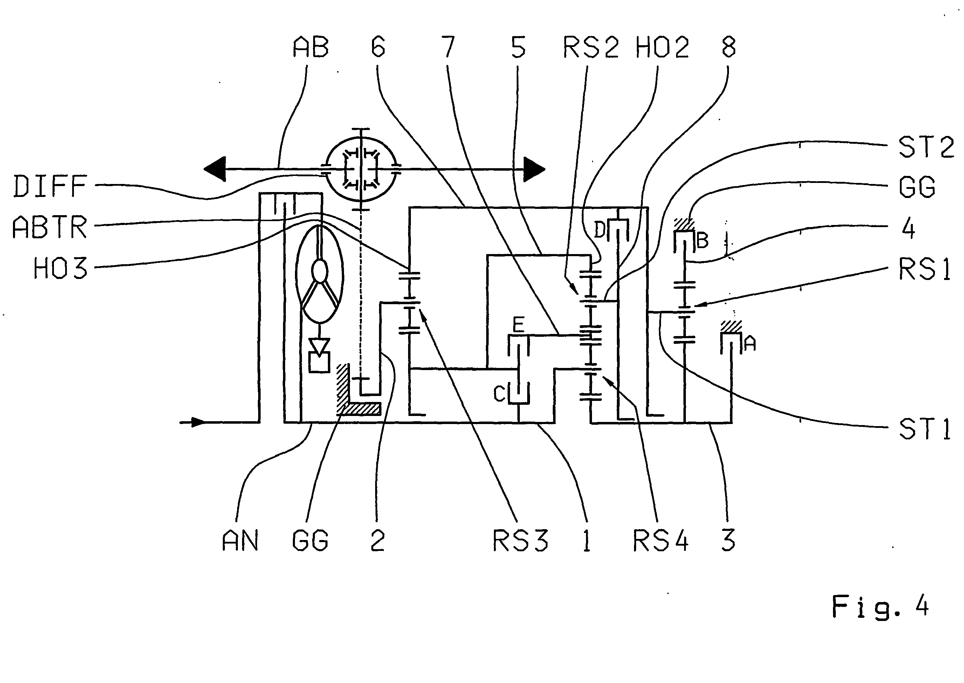

In Figur 4 ist ein viertes Ausführungsbeispiel eines erfindungsgemäßen Mehrstufengetriebes dargestellt, ebenfalls basierend auf dem Radsatzkonzept und der räumlichen Bauteilanordnung des anhand Figur 1 ausführlich beschriebenen ersten Ausführungsbeispiels eines erfindungsgemäßen Mehrstufengetriebes. Der einzige Unterschied zu Figur 1 betrifft diesmal die kinematische Anbindung des Kupplung D. Im Unterschied zu Figur 1 ist die Kupplung D nunmehr im Kraftfluss zwischen der Welle 8 und der Welle 6 des Getriebes angeordnet. Gemäß Figur 3 ist also das mit dem Steg ST1 des ersten Planetenradsatzes RS1 verbundene Hohlrad H03 des dritten Planetenradsatzes RS3 mittels der Kupplung E mit dem Steg ST2 des zweiten Planetenradsatzes RS2 verbindbar. Gemäß Figur 4 ist die Abtriebswelle AB des Getriebes also stets nur mit einem Radsatzelement verbunden bzw. wirkverbunden, nicht jedoch mittels eines Schaltelementes mit einem oder mehreren weiteren Radsatzelementen.

Entsprechend dieser gegenüber Figur 1 geänderten kinematischen Anbindung der Kupplung D ergibt sich auch eine gegenüber Figur 1 geänderte sinnvolle räumliche Anordnung dieser Kupplung D im Getriebgehäuse GG relativ zu den Planetenradsätzen. In dem in Figur 4 dargestellten Ausführungsbeispiel ist die Kupplung D beispielhaft in einem Bereich axial zwischen den radial ineinandergeschachtelten Planetenradsätzen RS2, RS4 und dem ersten Planetenradsatz RS1 angeordnet. Dabei kann das Lamellenpaket der Kupplung D beispielsweise auch räumlich gesehen zumindest teilweise radial über dem Hohlrad H02 des Planetenradsatzes RS2 angeordnet sein. Eine zur Vereinfachung in Figur 4 nicht näher dargestellte Servoeinrichtung der Kupplung D zur Betätigung deren Lamellenpaketes kann beispielsweise in konstruktiv einfacher Weise an dem hier als Außenlamellenträger ausgebildeten Abschnitt der Welle 6 axial verschiebbar gelagert sein, der nahe dem Steg ST1 des ersten Planetenradsatzes RS1 angeordnet und an der Welle 3 verdrehbar gelagert ist. In diesem Fall rotiert die Servoeinrichtung der Kupplung D stets mit Drehzahl der Welle 6 und weist zweckmäßigerweise auch einen dynamischen Druckausgleich auf, wobei die notwendige Druck- und Schmiermittelzufuhr in konstruktiv einfacher Weise über entsprechende Bohrungen bzw. Kanäle von der Welle 3 aus zugeführt werden können.

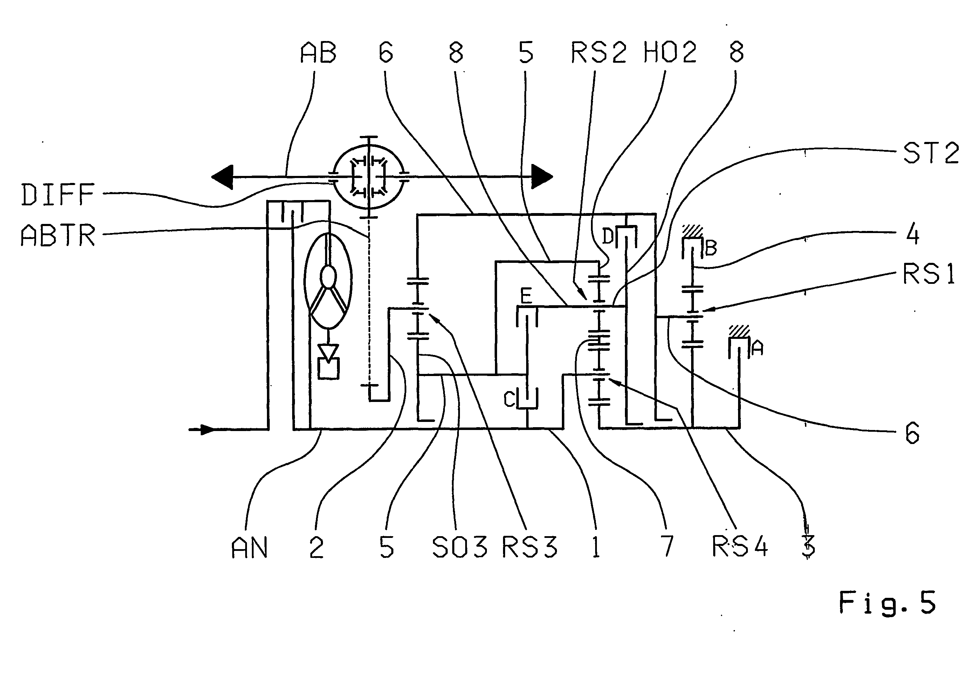

In Figur 5 ist ein fünftes Ausführungsbeispiel eines erfindungsgemäßen Mehrstufengetriebes dargestellt, basierend-auf dem Radsatzkonzept und der räumlichen Bauteilanordnung des anhand Figur 4 zuvor erläuterten vierten Ausführungsbeispiels eines erfindungsgemäßen Mehrstufengetriebes. Der einzige Unterschied zu Figur 4 betrifft die kinematische Anbindung des Kupplung E an den zweiten Planetenradsatz RS2. Wie in Figur 2 ist die Kupplung E nunmehr im Kraftfluss zwischen der Welle 5 und der Welle 8 des Getriebes angeordnet. Gemäß Figur 5 sind also die miteinander verbundenen Zentralräder S03 und H02 mittels der Kupplung E mit dem Steg ST2 des zweiten Planetenradsatzes RS2 verbindbar, wobei der zweite Planetenradsatz RS2 bei geschlossener Kupplung E wie in Figur 4 (und den Figuren 1, 2 und 3) als Block umläuft..

Im Prinzip handelt es sich bei dem in Figur 5 dargestellte fünften erfindungsgemäßen Getriebe also um eine Kombination der Radsatzschemata und Bauteilanordnungen der Figuren 2 und 4.

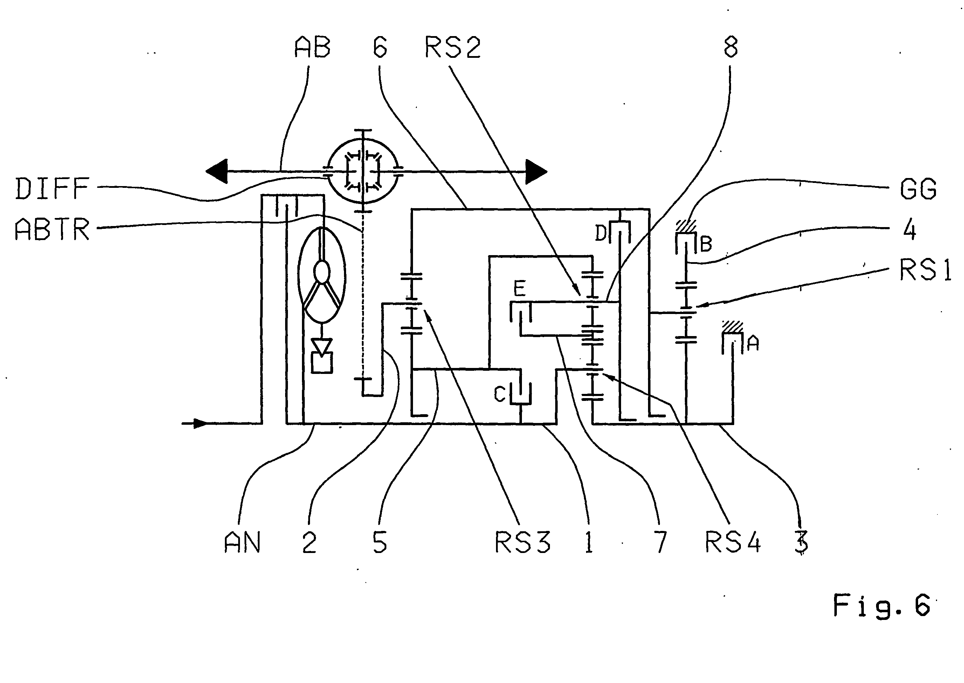

In Figur 6 schließlich ist ein sechstes Ausführungsbeispiel eines erfindungsgemäßen Mehrstufengetriebes dargestellt, wiederum basierend auf dem Radsatzkonzept und der räumlichen Bauteilanordnung des anhand Figur 4 zuvor erläuterten vierten Ausführungsbeispiels eines erfindungsgemäßen Mehrstufengetriebes. Der einzige Unterschied zu Figur 4 betrifft wieder die kinematische Anbindung des Kupplung E an den zweiten Planetenradsatz RS2. Wie in Figur 3 ist die Kupplung E nunmehr im Kraftfluss zwischen der Welle 7 und der Welle 8 des Getriebes angeordnet. Gemäß Figur 6 sind also die miteinander verbundenen Zentralräder H04 und S02 mittels der Kupplung E mit dem Steg ST2 des zweiten Planetenradsatzes RS2 verbindbar, wobei der zweite Planetenradsatz RS2 bei geschlossener Kupplung E wie in Figur 4 (und den Figuren 1, 2, 3 und 5) als Block umläuft.

Im Prinzip handelt es sich bei dem in Figur 6 dargestellte sechsten erfindungsgemäßen Getriebe also um eine Kombination der Radsatzschmata und Bauteilanordnungen der Figuren 3 und 4.

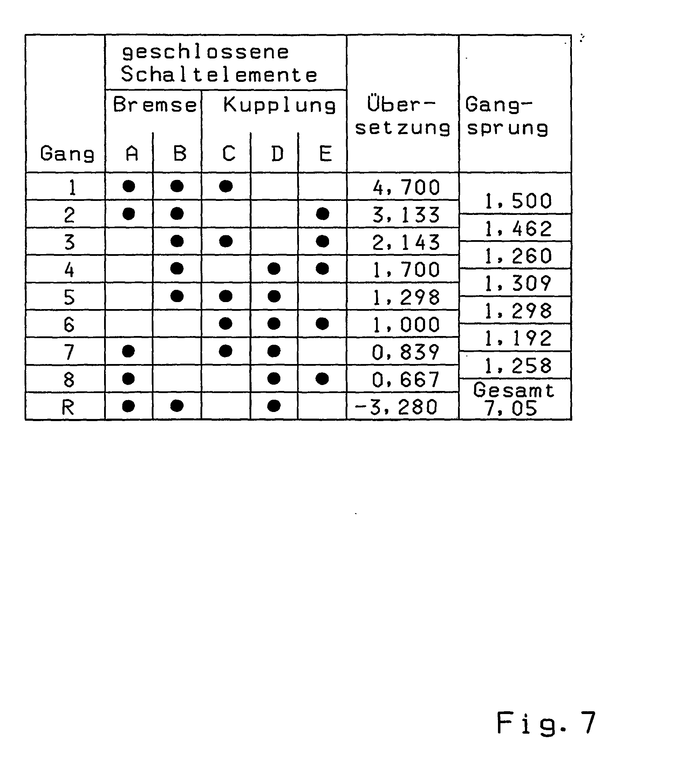

Figur 7 zeigt nun ein beispielhaftes Schaltschema, das für alle zuvor in den Figuren 1 bis 6 dargestellten erfindungsgemäßen Mehrstufengetriebe gültig ist. In jedem Gang sind drei Schaltelemente geschlossen und zwei Schaltelemente offen. Neben der Schaltlogik können dem Schaltschema auch beispielhafte Werte für die jeweiligen Übersetzungen i der einzelnen Gangstufen und die daraus zu bestimmenden Stufensprünge φ entnommen werden. Die angegebenen Übersetzungen i ergeben sich aus den (typischen) Standübersetzungen der vier Planetenradsätze RS1, RS2, RS3, RS4 von minus 2,10, minus 1,60, minus 3,70 und minus 2,00. Erst dadurch, dass im vorliegenden Fall die Standübersetzung des zweiten Planetenradsatzes RS2 betragsmäßig hinreichend klein und gleichzeitig die Standübersetzung des vierten Planetenradsatzes RS4 betragsmäßig hinreichend groß ist, ist die Voraussetzung für die erfindungsgemäße radiale Verschachtelung des zweiten und vierten Planetenradsatzes gegeben: Die Standübersetzung des Planetenradsatzes RS2 im Bereich von minus 1,6 ermöglicht ein Sonnenrad S02 mit vergleichsweise großem Durchmesser ohne dass die Planetenräder PL2 des Planetenradsatzes RS2 mit zu hohen Drehzahlen rotieren; die Standübersetzung des Planetenradsatzes RS4 im Bereich von minus 2,0 ermöglicht ein Hohlrad H04 mit vergleichsweise kleinem Durchmesser, ohne dass das Sonnenrad S04 des Planetenradsatzes RS4 vom Durchmesser her zu klein wird, um die geforderten Drehmomente übertragen zu können.

Des weiteren kann dem Schaltschema entnommen werden, dass bei sequentieller Schaltweise Gruppenschaltungen vermieden werden, da zwei in der Schaltlogik benachbarte Gangstufen zwei Schaltelemente gemeinsam benutzen. Der sechste Gang ist vorzugsweise als direkter Gang ausgebildet.

Der erste Vorwärtsgang ergibt sich durch Schließen der Bremsen A und B und der Kupplung C, der zweite Vorwärtsgang durch Schließen der Bremsen A und B und der Kupplung E, der dritte Vorwärtsgang durch Schließen der Bremse B und der Kupplungen C und E, der vierte Vorwärtsgang durch Schlieβen der Bremse B und der Kupplungen D und E, der fünfte Vorwärtsgang durch Schließen der Bremse B und der Kupplungen C und D, der sechste Vorwärtsgang durch Schließen der Kupplungen C, D und E, der siebte Vorwärtsgang durch Schließen der Bremse A und der Kupplungen C und D, sowie der achte Vorwärtsgang durch Schließen der Bremse A und der Kupplungen D und E. Wie aus dem Schaltschema weiter ersichtlich, ergibt sich der Rückwärtsgang durch Schließen der Bremsen A und B und der Kupplung D.

Gemäß der Erfindung ist ein Anfahren des Kraftfahrzeugs mit einem im Getriebe integrierten Schaltelement möglich. Hierbei ist ein Schaltelement besonders geeignet, das sowohl im ersten Vorwärtsgang als auch im Rückwärtsgang benötigt wird, hier also vorzugsweise die Bremse A oder die Bremse B. In vorteilhafter Weise werden diese beiden Bremsen A, B auch im zweiten Vorwärtsgang benötigt. Wird die Bremse B als im Getriebe integriertes Anfahrelement genutzt, so ist damit sogar ein Anfahren in den ersten fünf Vorwärtsgängen und dem Rückwärtsgang möglich. Wie aus dem Schaltschema ersichtlich, kann zum Anfahren in Vorwärtsfahrtrichtung auch die Kupplung C und zum Anfahren in Rückwärtsfahrtrichtung die Kupplung D als getriebeintemes Anfahrelement verwendet werden.

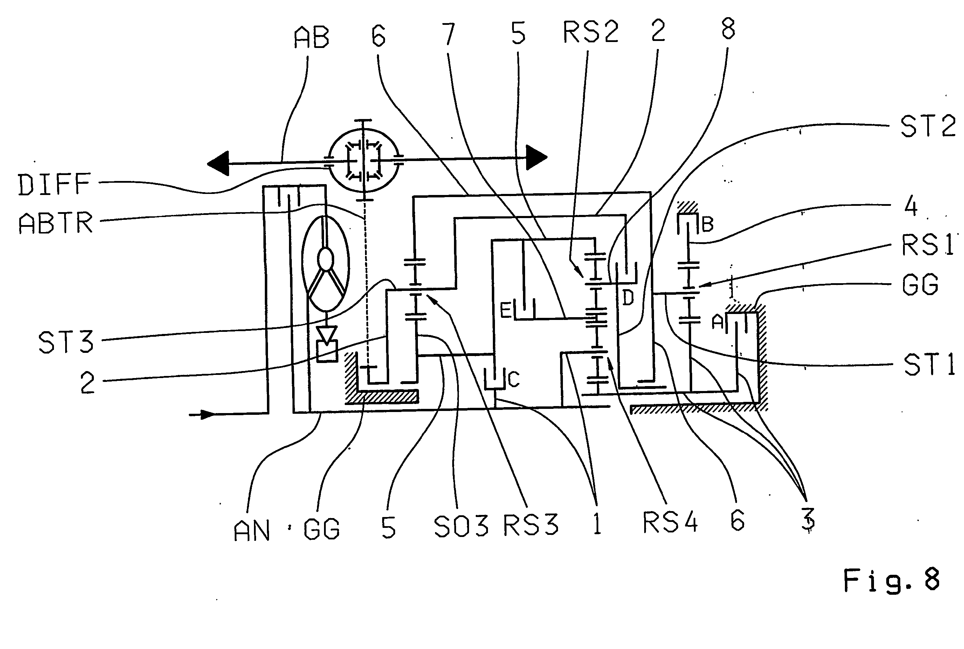

Die räumliche Anordnung der Schaltelemente des in den Figuren 1 bis 6 dargestellten Ausführungsbeispiele eines erfindungsgemäßen Mehrstufengetriebes innerhalb des Getriebes kann im Prinzip beliebig sein und wird nur durch die Abmessungen und die äußere Formgebung des Getriebegehäuses GG begrenzt. Entsprechend ist in Figure 8 eine erste beispielhafte Bauteilanordnungs-Variante des Mehrstufengetriebes gemäß Figur 1 dargestellt, wobei alle kinematischen Kopplungen der Radsatzelemente, Schaltelemente und Wellen untereinander unverändert aus Figur 1 übernommen sind.

Die wesentliche Änderung gegenüber Figur 1 betrifft die räumliche Anordnung der Kupplung D und die konstruktive Ausgestaltung der Kupplung E. Wie in Figur 8 ersichtlich, ist die Kupplung D räumlich gesehen nunmehr auf der dem ersten Planetenradsatz RS1 zugewandten Seite der aus den beiden radial ineinandergeschachtelten Planetenradsätzen RS2 und RS4 gebildeten Radsatzgruppe angeordnet. Dabei grenzt das Lamellenpaket der Kupplung D axial unmittelbar an den Steg ST2 des (radial äußeren) Planetenradsatzes RS2 dieser Radsatzgruppe an. Im dargestellten Beispiel ist der Innenlamellenträger der Bremse D mit diesem Steg ST2 verbunden, an der Welle 3 verdrehbar gelagert und nimmt vorzugsweise Belaglamellen des Lamellenpaketes der Kupplung D auf. Entsprechend ist der Außenlamellenträger der Kupplung D über die Welle 2 mit dem Steg ST3 des dritten Planetenradsatzes RS3 und der Abtriebsstufe ABTR verbunden, wobei die Welle 2 den Planetenradsatz RS2 bzw. die Radsatzgruppe mit den beiden Planetenradsätzen RS2, RS4 sowie die beiden Kupplungen C, E und in axialer Richtung radial übergreift. Eine in Figur 8 zur Vereinfachung nicht näher dargestellte Servoeinrichtung zur Betätigung des Lamellenpaketes der Kupplung D ist daher zweckmäßigerweise an diesem Innenlamellenträger axial verschiebbar gelagert und rotiert dann stets mit Drehzahl der Welle 8 bzw. mit Drehzahl des Stegs ST2. Entsprechend können Druckmittelzuführung zu einem Druckraum dieser Servoeinrichtung und Schmiermittelzuführung zu einem zur Kompensation des rotatorischen Drucks dieses rotierenden Druckraums vorgesehenen Druckausgleichsraum dieser Servoeinrichtung in konstruktiv einfacher Weise über entsprechende Bohrungen bzw. Kanäle von einer getriebegehäusefeste Nabe und der Welle 3 her erfolgen.

Ein weiteres gegenüber Figur 1 geändertes Konstruktionsdetail betrifft die Lagerung des Stegs ST1 des ersten Planetenradsatzes RS1 bzw. der Welle 6. Wie in Figur 8 ersichtlich, ist dieser Steg ST1 bzw. die Welle 6 nunmehr an dem Steg ST3 des zweiten Planetenradsatzes bzw. an der Welle 8 verdrehbar gelagert und nicht mehr direkt an der Welle 3.

Wie in Figur 8 weiterhin ersichtlich, weist die Welle 7 einen Abschnitt auf, der als Innenlamellenträger zur Aufnahme von Belaglamellen des Lamellenpaketes der Kupplung E ausgebildet ist. Entsprechend weist die Welle 5 einen Abschnitt auf, der als Außenlamellenträger zur Aufnahme von Stahllamellen des Lamellenpaketes der Kupplung E ausgebildet ist. Dabei ist das Lamellenpaket der Kupplung E in axialer Richtung gesehen nunmehr zumindest weitgehend neben dem Lamellenpaket des Kupplung C angeordnet, im dargestellten Beispiel auf einem größeren Durchmesser als das Lamellenpaket der Kupplung C und näher am Planetenradsatz RS2 als das Lamellenpaket der Kupplung C.

Ein weiteres gegenüber Figur 1 geändertes Konstruktionsdetail betrifft die Lagerung des Sonnenrades S03 des dritten Planetenradsatzes RS3 bzw. der Welle 5. Im Unterschied zu Figur 1, bei der dieses Sonnenrad S03 bzw. die Welle 5 an der Antriebswelle AN bzw. der Welle 1 verdrehbar gelagert ist und daher indirekt über die Antriebswelle AN am Getriebegehäuse GG gelagert ist, ist gemäß Figur 8 das Sonnenrad S03 bzw. die Welle 5 nunmehr direkt an einer getriebegehäusefesten Nabe verdrehbar gelagert. In einer anderen Ausgestaltung kann beispielsweise auch vorgesehen sein, dass das Sonnenrad S03 an dem mit dem Steg ST3 des dritten Planetenradsatzes RS3 verbundenen Stim- oder Kettenrad der Abtriebsstufe ABTR verdrehbar gelagert ist.

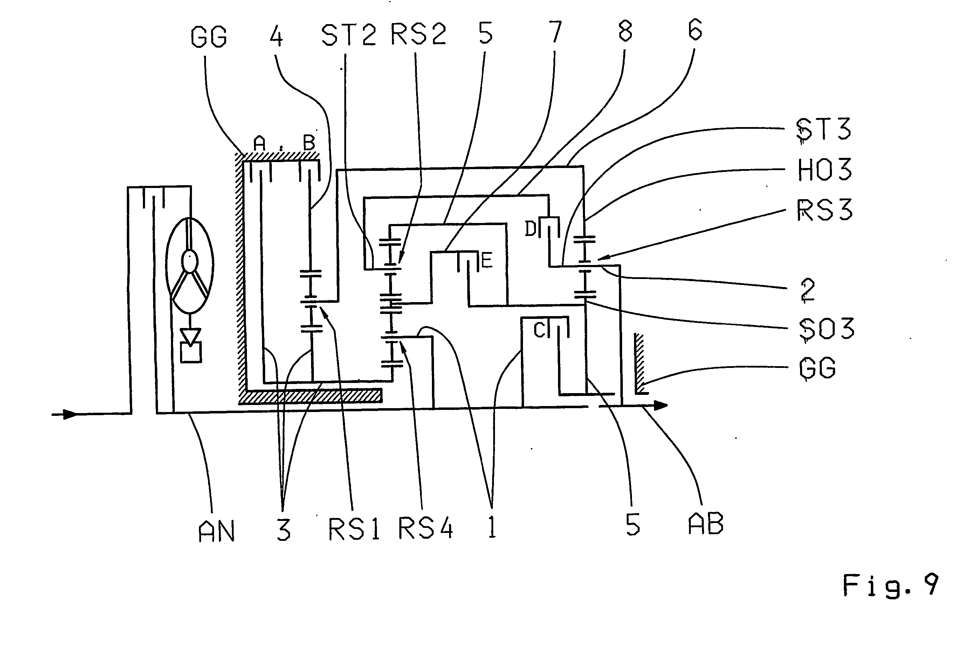

Figur 9 zeigt nun eine zweite beispielhafte Bauteilanordnungs-Variante dss Mehrstufengetriebes gemäß Figure 1, wobei alle kinemaschen Kupplungen der Radsatzelemente, Schaltelemente und Wellen untereinander unverändert aus Figur 1 übernommen sind. In dem in Figur 9 dargestellten Ausführungsbeispiel sind Antriebswelle AN und Abtriebswelle AB des Getriebes nunmehr koaxial zueinander angeordnet. In axialer Richtung gesehen, ist die räumliche Abfolge der Planetenradsätze im Getriebegehäuse gegenüber Figur 1 unverändert. Im Unterschied zu Figur 1 ist der Antrieb des Getriebes auf der Seite des Getriebegehäuses GG angeordnet, an der auch der, erste Planetenradsatz RS1 und die beiden Bremsen A und B angeordnet sind. Entsprechend befindet sich der Abtrieb des Getriebes auf der Seite des Getriebegehäuses GG, an der auch der dritte Planetenradsatz RS3 angeordnet ist.

Beispielhaft sind die beiden Bremsen A, B axial unmittelbar nebeneinander angeordnet, wobei die Lamellenpakete beider Bremsen A, B auf einem zumindest ähnlichen Durchmesser angeordnet sind. Beispielhaft sind der Innenlamellenträger der Bremse A und die Sonnenwelle 3 direkt an einer getriebegehäusefesten Nabe verdrehbar gelagert. Selbstverständlich kann das in Figur 9 räumlich gesehen radial über dem ersten Planetenradsatz RS1 angeordnete Lamellenpaket der Bremse B in einer anderen Ausgestaltung des Getriebes auch ausgehend von der Darstellung in Figur 9 axial in Richtung Planetenradsatz RS2 versetzt angeordnet sein, sodass das Lamellenpaket der Bremse A dann räumlich gesehen radial über dem ersten Planetenradsatz RS1 angeordnet ist.

Wie in Figur 9 weiterhin ersichtlich, sind die beiden Kupplungen C, E und zumindest das Lamellenpaket der Kupplung D räumlich gesehen in einem Bereich axial zwischen dem dritten Planetenradsatz RS3 und der Radsatzgruppe angeordnet, die durch die beiden radial ineinandergeschachtelten Planetenradsätze RS2 und RS4 gebildet wird. In dem dargestellten Ausführungsbeispiel sind die Lamellenpakete der Kupplungen C und D im wesentlichen radial übereinander angeordnet. Die-Kupplung E its benachbart zum zweiten Planetenradsatz RS2 angeordnet. Die beiden Kupplungen C, D sind benachbart zum dritten Planetenradsatz RS3 angeordnet, wobei das Lamellenpaket der Kupplung D axial unmittelbar an den Planetenradsatz RS3 im Bereich dessen Hohlrades H03 angrenzt, und wobei das Lamellenpaket der Kupplung C axial unmittelbar an den Planetenradsatz RS3 im Bereich dessen Sonnenrades S03 angrenzt.

Ein Anschnitt der Welle 7 ist als Außenlamellenträger der Kupplung E ausgebildet und nimmt vorzugsweise Belaglamellen des Lamellenpaketes der Kupplung E auf. Entsprechend ist ein Abschnitt der Welle 5 als Innenlamellenträger der Kupplung E ausgebildet und nimmt vorzugsweise Stahllamellen des Lamellenpaketes der Kupplung E auf. Entsprechend der koaxialen Anordnung von An- und Abtrieb ist die Welle 5 nunmehr sowohl an der Antriebswelle AN bzw. der Welle 1 als auch an der Abtriebswelle AB bzw. der Welle 2 verdrehbar gelagert, wobei sich dieser Lagerabschnitt räumlich gesehen im Bereich radial unter dem Sonnenrad S03 des dritten Planetenradsatzes RS3 befindet. Im Bereich dieses Lagerabschnitts nahe dem Sonnenrad SO3 befindet sich auch ein Abschnitt der Welle 5, der als Innenlamellenträger der Kupplung C ausgebildet ist und vorzugsweise Stahllamellen des Lamellenpaketes der Kupplung C aufnimmt. Entsprechend bildet ein zylinderFörmiger Abschnitt der Welle 1 den Außenlamellenträger der Kupplung C und nimmt vorzugsweise Belaglamellen des Lamellenpaketes der Kupplung C auf.

Abweichend von der Darstellung in Figur 9 kann in einer anderen Ausgestaltung des Getriebes beispielsweise auch vorgesehen sein, dass die Kupplung C auf der Seite des dritten Planetenradsatzes RS3 angeordnet ist, die der Radsatz-Baugruppe RS2/RS4 gegenüber liegt.

Wie in Figur 9 weiterhin ersichtlich, ist ein Abschnitt der Welle 2 im Bereich des Stegs ST3 des dritten Planetenradsatzes RS3 ats innenlamellenträger der Kupplung D ausgebildet und nimmt vorzugsweise Stahllamellen des Lamellenpaketes der Kupplung D auf. Steg ST2 und Innenlamellenträger der Kupplung D können also als gemeinsames Bauteil zusammengefasst sein. Entsprechend ist ein Abschnitt der Welle 8 als Außenlamellenträger der Kupplung D ausgebildet und nimmt vorzugsweise Belaglamellen des Lamellenpaketes der Kupplung D auf. Die auf der dem Lamellenpaket der Kupplung D gegenüberliegenden Seite des zweiten Planetenradsatzes RS2 mit dessen Steg ST2 verbundene Welle 8 übergreift also wie in Figur 1 die Kupplung E in axialer Richtung radial vollständig.

Die für die möglichen Ausgestaltungen von Servoeinrichtungen der fünf Reibschaltelemente A bis E im Rahmen der Beschreidung von Figur 1 getroffenen Aussagen sind im Prinzip auch auf die in Figur 9 dargestellte räumliche Anordnung der Schaltelemente A bis E übertragbar. Entsprechend der in Figur 9 dargestellten Ausbildung und Anordnung der Lamellenträger der drei Kupplungen C, D, E ist es sinnvoll, dass die Servoeinrichtung der Kupplung C innerhalb des Zylinderraums des Außenlamellenträgers der Kupplung C angeordnet ist und das ihm zugeordnete Lamellenpaket beim Schließen axial in Richtung Planetenradsatz RS3 betätigt und dass die Servoeinrichtung der Kupplung E innerhalb des Zylinderraums des Außenlamellenträgers der Kupplung E bzw. innerhalb des Zylinderraums der Welle 7 angeordnet ist und das ihm zugeordnete Lamellenpaket beim Schließen axial in Richtung Planetenradsatz RS3 betätigt. Weiterhin ist es bei dem in Figur 9 dargestellten Ausführungsbeispiel sinnvoll, dass die Servoeinrichtung der Kupplung D im wesentlichen axial zwischen dem ersten Planetenradsatz RS1 und den beiden radial ineinandergeschachtelten Planetenradsätzen RS2, RS4 angeordnet ist und ein Betätigungselement aufweist, welches die Welle 8 in axialer Richtung radial umgreift und das Lamellenpaket der Kupplung D beim Schließen axial in Richtung Planetenradsatz RS2 betätigt.

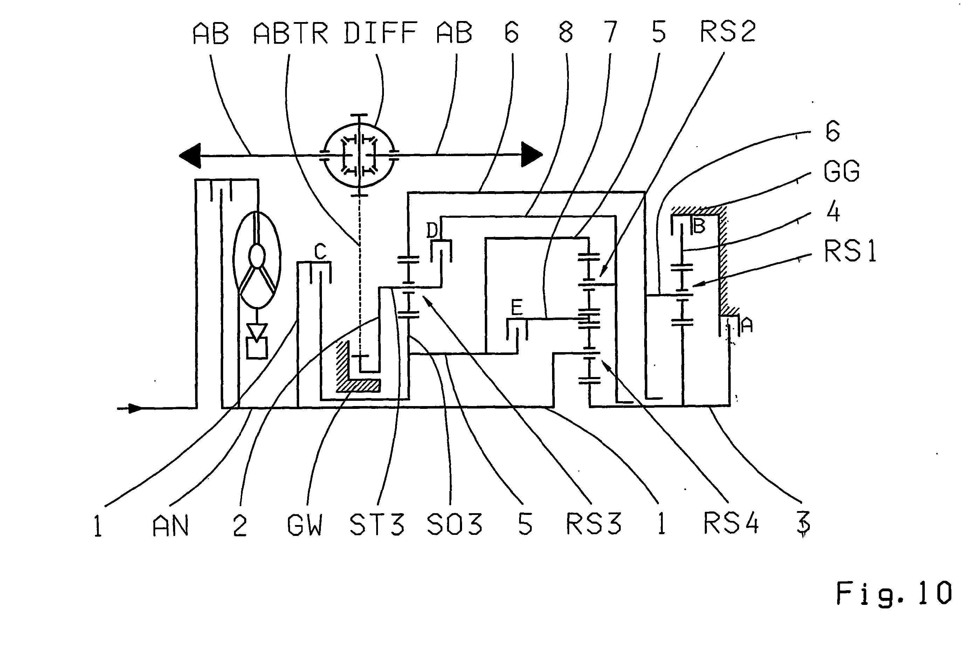

Figur 10 schließlich zeigt eine dritte beispielhafte Bauteilanordnungs-Variante des Mehrstufengetriebes gemäß Figur 1, wobei alle kinematischen Kopplungen der Radsatzetemente, Schaltelemente und Wellen untereinander unverändert aus Figur 1 übernommen sind. Abweichend von Figur 1 ist die Kupplung C nunmehr auf der Seite des dritten Planetenradsatzes RS3 angeordnet, die der Radsatz-Baugruppe RS2/RS4 gegenüberliegt, räumlich gesehen auf der dem Antrieb des Getriebes zugewandten Seite des Getriebes. In dem in Figur 10 dargestellten Ausführungsbeispiel bildet ein Außenlamellenträger der Kupplung C einen Abschnitt der Welle 1 des Getriebes und ist mit der Antriebswelle AN verbunden. Entsprechend bildet ein Innenlamellenträger der Kupplung C einen Abschnitt der Welle 5 des Getriebes. Eine in Figur 10 zur Vereinfachung nicht näher dargestellte Servoeinrichtung der Kupplung C kann in konstruktiv einfacher Weise an dem Außenlamellenträger der Kupplung C axial verschiebbar gelagert sein, über entsprechende Kanäle bzw. Bohrungen von der Antriebswelle AN her mit Druck- und Schmiermittel versorgt werden und das ihr zugeordnete Lamellenpaket beim Schließen der Kupplung C axial in Richtung Planetenradsatz RS3 betätigen.

Wie in Figur 10 weiter ersichtlich, ist zumindest das mit dem Steg ST3 des dritten Planetenradsatzes RS3 verbundene Stim- oder Kettenrad der Abtriebsstufe ABTR axial zwischen dem dritten Planetenradsatz RS3 und der Kupplung C angeordnet, sodass ein Abschnitt der Welle 5, der mit dem Innenlamellenträger der Kupplung C verbunden ist, die Abtriebsstufe ABTR in axialer Richtung zentrisch durchgreift. Dabei ist die Welle 5 auf der Welle 1 bzw. Antriebswelle AN verdrehbar gelagert. Hinsichtlich der Lagerung des mit dem Steg ST3 des dritten Planetenradsatzes RS3 verbundenen Stim- bzw. Kettenrads der Abtriebsstufe ABTR ist in Figur 10 beispielhaft vorgesehen, dass räumlich gesehen axial zwischen der Kupplung C und dem genannten angetriebenen Stim- bzw. Kettenrads der Abtriebsstufe ABTR ein mit dem Getriebegehäuse GG verdrehfest verbundene Gehäusewand GW zumindest weitgehend radialer Erstreckung angeordnet ist, die abschnittsweise als eine Lagerplatte für das genannte angetriebene Stim- bzw. Kettenrad der Abtriebsstufe ABTR ausgebildet ist.

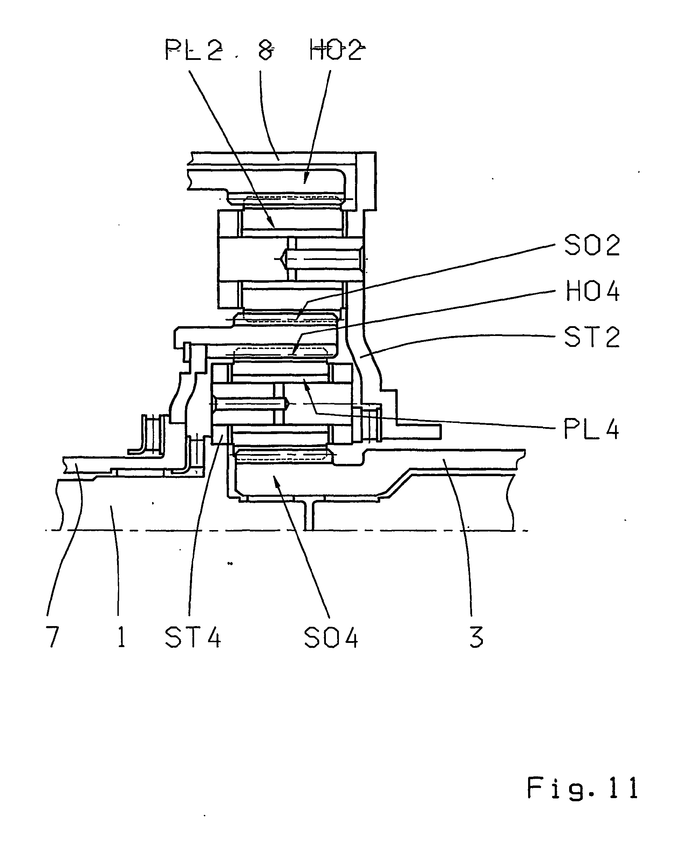

Figur 11 zeigt nun eine beispielhafte Detail-Konstruktion, betreffend die aus dem zweiten und vierten Planetenradsatz RS2, RS4 gebildeten Radsatzgruppe. Wie zuvor schon beschrieben sind diese beiden Planetenradsätze - RS2, RS4 gemäß der Erfindung radial ineinandergeschachtelt, wobei der vierte Planetenradsatz RS4 zumindest im wesentlichen zentrisch innerhalb des zweiten Planetenradsatzes RS2 angeordnet ist, wobei das Sonnenrad S02 des radial äußeren Planetenradsatzes RS2 mit dem Hohlrad H04 des radial inneren Planetenradsatzes RS4 verbunden ist. In dem in Figur 10 dargestellten Detail-Konstruktion sind dieses Sonnenrad S02 und dieses Hohlrad H04 einstückig ausgeführt. Hierdurch kann der für die genannte Radsatzgruppe benötigte radiale Bauraum auf ein Minimum reduziert werden.

In einer anderen konstruktiven Ausgestaltung von Sonnenrad S02 und Hohlrad H04 kann abweichend zu Figur 10 beispielsweise auch aus akustischen Gründen vorgesehen sein, dass Sonnenrad S02 und Hohlrad H04 jeweils als separate Bauteile ausgeführt und miteinander verbunden sind, wobei diese Verbindung starr verdrehfest oder auch in definiertem Maß verdrehelastisch ausgeführt sein kann. So können zur akustischen Entkopplung beispielsweise Elastomer-Zwischenlagen radial zwischen Sonnenrad S02 und Hohlrad H04 angeordnet sein.

Selbstverständlich sind die in den Figuren 9 bis 10 beschriebenen Bauteilanordnungs-Varianten nicht auf die Anwendung des Radsatzkonzeptes gemäß Figur 1 beschränkt. Der Fachmann wird diese Varianten bei Bedarf auch ohne erfinderische Hinzutun sinngemäß auf die anderen erfindungsgemäßen Radsatzkonzepte, wie sie in den Figuren 2 bis 6 dargestellt sind, übertragen.

Für alle zuvor dargestellten bzw. beschriebenen Ausführungsbeispiele der Getriebefamilie gemäß der Erfindung gilt zudem folgendes:

Gemäß der Erfindung können sich auch bei gleichem Getriebeschema, je nach Standgetriebeübersetzung der einzelnen Planetensätze, unterschiedliche Gangsprünge ergeben, so dass eine anwendungs- bzw. fahrzeugspezifische Variation ermöglicht wird.

Es ist zudem möglich, an jeder geeigneten Stelle des Mehrstufengetriebes zusätzliche Freiläufe vorzusehen, beispielsweise zwischen einer Welle und dem Gehäuse oder um zwei Wellen gegebenenfalls zu verbinden.

Im Rahmen einer vorteilhaften Weiterbildung kann die Antriebswelle AN durch ein Kupplungselement von einem Antriebsmotor nach Bedarf getrennt werden, wobei als Kupplungselement ein hydrodynamischer Wandler, eine hydraulische Kupplung, eine trockene Anfahrkupplung, eine nasse Anfahrkupplung, eine Magnetpulverkupplung oder eine Fliehkraftkupplung einsetzbar sind. Es ist auch möglich, ein derartiges Anfahrelement in Kraftflussrichtung hinter dem Getriebe anzuordnen, wobei in diesem Fall die Antriebswelle AN ständig mit der Kurbelwelle des Antriebsmotors verbunden ist. Das erfindungsgemäße Mehrstufengetriebe ermöglicht außerdem die Anordnung eines Torsionsschwingungsdämpfers zwischen Antriebsmotor und Getriebe.

Im Rahmen einer weiteren, nicht dargestellten Ausführungsform der Erfindung kann auf jeder Welle, bevorzugt auf der Antriebswelle AN oder der Abtriebswelle AB, eine verschleißfreie Bremse, wie z.B. ein hydraulischer oder elektrischer Retarder oder dergleichen, angeordnet sein, welche insbesondere für den Einsatz in Nutzkraftfahrzeugen von besonderer Bedeutung ist. Des weiteren kann zum Antrieb von zusätzlichen Aggregaten auf jeder Welle, bevorzugt auf der Antriebswelle AN oder der Abtriebswelle AB, ein Nebenabtrieb vorgesehen sein.

Die eingesetzten Schaltelemente können als lastschaltende Kupplungen oder Bremsen ausgebildet sein. Insbesondere können kraftschlüssige Kupplungen oder Bremsen, wie z.B. Lamellenkupplungen, Bandbremsen und/oder Konuskupplungen, verwendet werden. Des weiteren können als Schaltelemente auch formschlüssige Bremsen und/oder Kupplungen, wie z.B. Synchronisierungen oder Klauenkupplungen eingesetzt werden. Insbesondere für die Bremse B bietet sich die Verwendung einer baulängensparende Bandbremse an, da diese Bremse B entsprechend der Schaltlogik des Getriebes nur beim Einlegen des Rückwärtsgangs aus Neutralstellung heraus und nur bei der Rückschaltung in den fünften Vorwärtsgang zugeschaltet werden muss.

Ein weiterer Vorteil des hier vorgestellten Mehrstufengetriebes besteht darin, dass an jeder Welle zusätzlich eine elektrische Maschine als Generator und/oder als zusätzliche Antriebsmaschine anbringbar ist.

Selbstverständlich fällt auch jede konstruktive Ausbildung, insbesondere jede räumliche Anordnung der Planetensätze und der Schaltelemente an sich sowie zueinander und soweit technisch sinnvoll, unter den Schutzumfang der vorliegenden Ansprüche, ohne die Funktion des Getriebes, wie sie in den Ansprüchen angegeben ist, zu beeinflussen, auch wenn diese Ausbildungen nicht explizit in den Figuren oder in der Beschreibung dargestellt sind.

### Bezugszeichen

- 1: erste Welle
- 2: zweite Welle
- 3: dritte Welle
- 4: vierte Welle
- 5: fünfte Welle
- 6: sechste Welle
- 7: siebte Welle
- 8: achte Welle

- A: erstes Schaltelement, erste Bremse
- B: zweites Schaltelement, zweite Bremse
- C: drittes Schaltelement, erste Kupplung
- D: viertes Schaltelement, zweite Kupplung
- E: fünftes Schaltelement, dritte Kupplung

- AN: Antriebswelle
- AB: Abtriebswelle
- GG: Gehäuse
- GW: Gehäusewand
- ABTR: Abtriebstufe, Stirntrieb, Kettentrieb
- DIFF: Differential

- RS1: erster Planetenradsatz
- HO1: Hohlrad des ersten Planetenradsatzes
- SO1: Sonnenrad des ersten Planetenradsatzes
- ST1: Steg des ersten Planetenradsatzes
- PL1: Planetenräder des ersten Planetenradsatzer

- RS2: zweiter Planetenradsatz
- H02: Hohlrad des zweiten Planetenradsatzes
- S02: Sonnenrad des zweiten Planetenradsatzes
- ST2: Steg des zweiten Planetenradsatzes
- PL2: Planetenräder des zweiten Planetenradsatzes

- RS3: dritter Planetenradsatz
- H03: Hohlrad des dritten Planetenradsatzes
- S03: Sonnenrad des dritten Planetenradsatzes
- ST3: Steg des dritten Planetenradsatzes
- PL3: planetenräder des dritten Planetenradsatzes

- RS4: vierter Planetenradsatz
- H04: Hohlrad des vierten Planetenradsatzes
- S04: Sonnenrad des vierten Planetenradsatzes
- ST4: Steg des vierten Planetenradsatzes
- PL4: Planetenräder des vierten Planetenradsatzes

- i: Übersetzung
- φ: Stufensprung

## Patentansprüche

1. Mehrstufengetriebe in Planetenbauweise, insbesondere Automatgetriebe für ein Kraftfahrzeug, umfassend eine Antriebswelle (AN) und eine Abtriebswelle (AB), vier Planetenradsätze (RS1, RS2, RS3, RS4), mindestens acht drehbare Welle (1, 2, 3, 4, 5, 6, 7, 8) sowie fünf Schaltelemente (A, B, C, D, E), deren selektives Eingreifen verschiedene Übersetzungsverhältnisse zwischen der Antriebswelle (AN) und der Abtriebswelle (AB) bewirkt, so dass acht Vorwärtsgänge und zumindest ein Rückwärtsgang realisierbar sind, wobei
■ ein Steg (ST4) des vierten Planetenradsatzes (RS4) und die Antriebswelle (AN) verdrehfest miteinander verbunden sind und die erste Welle (1) bilden,
■ ein Steg (ST3) des dritten Planetenradsatzes (RS3) und die Abtriebswelle (AB) miteinander verbunden sind und die zweite Welle (2) bilden,
■ ein Sonnenrad (SO1) des ersten Planetenradsatzes (RS1) und ein Sonnenrad (S04) des vierten Planetenradsatzes (RS4) verdrehfest miteinander verbunden sind und die dritte Welle (3) bilden,
■ ein Hohlrad (HO1) des ersten Planetenradsatzes (RS1) die vierte Welle (4) bildet,
■ ein Hohlrad (H02) des zweiten Planetenradsatzes (RS2) und ein Sonnenrad (S03) des dritten Planetenradsatzes (RS3) verdrehfest miteinander verbunden sind und die fünfte Welle (5) bilden,
■ ein Steg (ST1) des ersten Planetenradsatzes (RS1) und ein Hohlrad (H03) des dritten Planetenradsatzes (RS3) verdrehfest miteinander verbunden sind und die sechste Welle (6) bilden,
■ ein Sonnenrad (S02) des zweiten Planetenradsatzes (RS2) und ein Hohlrad (H04) des vierten Planetenradsatzes (RS4) verdrehfest miteinander verbunden sind und die siebte Welle (7) bilden und
■ ein Steg (ST2) des zweiten Planetenradsatzes (RS2) die achte Welle (8) bildet,
■ das erste Schaltelement (A) im Kraftfluss zwischen der dritten Welle (3) und einem Gehäuse (GG) des Getriebes angeordnet ist,
■ das zweite Schaltelement (B) im Kraftfluss zwischen der vierten Welle (4) und dem Gehäuse (GG) des Getriebes angeordnet ist,
■ das dritte Schaltelement (C) im Kraftfluss zwischen der fünften Welle (5) und der ersten Welle (1) angeordnet ist,
■ das vierten Schaltelement (D) im Kraftfluss entweder zwischen der achten Welle (8) und der zweiten Welle (2) oder zwischen der achten Welle (8) und der sechsten Welle (6) angeordnet ist, und
■ das fünfte Schaltelement (E) im Kraftfluss entweder zwischen der siebten Welle (7) und der fünften Welle (5), zwischen der siebten Welle (7) und der achten Welle (8) oder zwischen der fünften Welle (5) und der achten Welle (8) angeordnet ist,
und wobei
■ der zweite und vierte Planetenradsatz (RS2, RS4) in axialer Richtung gesehen in einer Ebene radial übereinander angeordnet sind,
■ der vierte Planetenradsatz (RS4) zentrisch innerhalb des zweiten Planetenradsatzes (RS2) angeordnet ist, und
■ der zweite und vierte Planetenradsatz (RS2, RS4) räumlich gesehen in einem Bereich axial zwischen dem ersten und dritten Planetenradsatz (RS1, RS3) angeordnet sind.

2. Mehrstufengetriebe nach Anspruch 1, **dadurch gekennzeich**n e t , dass das Hohlrad (H04) des vierten Planetenradsatzes (RS4) gleichzeitig das Sonnenrad (S02) des zweiten Planetenradsatzes (RS2) bildet, wobei das Hohlrad (HO4) des vierten Planetenradsatzes (RS4) und das Sonnenrad (S02) des zweiten Planetenradsatzes (RS2) als gemeinsames Bauteil einstückig ausgeführt sind.

3. Mehrstufengetriebe nach Anspruch 1, **dadurch gekennzeichnet, dass** das Hohlrad (H04) des vierten Planetenradsatzes (RS4) und das Sonnenrad (S02) des zweiten Planetenradsatzes (RS2) jeweils als separates Bauteil ausgeführt und miteinander verbunden sind.

4. Mehrstufengetriebe nach Anspruch 3, **dadurch gekennzeichnet, dass** das Hohlrad (H04) des vierten Planetenradsatzes (RS4) und das Sonnenrad (S02) des zweiten Planetenradsatzes (RS2) verdrehfest miteinander verbunden sind.

5. Mehrstufengetriebe nach Anspruch 3, **dadurch gekennzeichnet, dass** das Hohlrad (H04) des vierten Planetenradsatzes (RS4) und das Sonnenrad (S02) des zweiten Planetenradsatzes (RS2) verdrehelastisch miteinander verbunden sind.

6. Mehrstufengetriebe nach einem der vorstehenden Ansprüche, **dadurch gekennzeichnet, dass** der Steg (ST4) des vierten Planetenradsatzes (RS4) über die Antriebswelle (AN) bzw. die erste Welle (1) des Getriebes radial an dem Getriebegehäuse (GG) bzw. einer getriebegehäusefesten Nabe oder radial in der dritten Welle (3) des Getriebes gelagert ist:

7. Mehrstufengetriebe nach einem der vorstehenden Ansprüche, **dadurch gekennzeichnet, dass** der Steg (ST2) des zweiten Planetenradsatzes (RS2) radial auf der dritten Welle (3) des Getriebes gelagert ist.

8. Mehrstufengetriebe nach einem der vorstehenden Ansprüche, **dadurch gekennzeichnet, dass** sich
■ der erste Vorwärtsgang durch Schließen des ersten, zweiten und dritten Schaltelementes (A, B, C),
■ der zweite Vorwärtsgang durch Schließen des ersten, zweiten und fünften Schaltelementes (A, B, E),
■ der dritte Vorwärtsgang durch Schließen des zweiten, dritten und fünften Schaltelementes (B, C, E),
■ der vierte Vorwärsgang durch Schließen des zweiten, vierten und fünften Schaltelementes (B, D, E),
■ der fünfte Vorwärtsgang durch Schließen des zweiten, dritten und vierten Schaltelementes (B, C, D),
der sechste Vorwärtsgang durch Schließen des dritten, vierten und fünften Schaltelementes (C, D, E),
der siebte Vorwärtsgang durch Schließen des ersten, dritten und vierten Schaltelementes (A, C, D) und
■ der achte Vorwärtsgang durch Schließen des ersten, vierten und fünften Schaltelementes (A, D, E)
ergibt.

9. Mehrstufengetriebe nach einem der vorstehenden Ansprüche, **dadurch gekennzeichnet, dass** sich ein Rückwärtsgang durch Schlieβen des ersten, zweiten und vierten Schaltelementes (A, B, D) ergibt.

10. Mehrstufengetriebe nach einem der vorstehenden Ansprüche, **dadurch gekennzeichnet, dass** alle vier Planetenradsätze (RS1, RS2, RS3, RS4) als Minus-Planetenradsätze ausgebildet sind.

11. Mehrstufengetriebe nach einem der vorstehenden Ansprüche, **dadurch gekennzeichnet, dass** der erste, dritte und vierte Planetenradsatz (RS1, RS3, RS4) jeweils höchstens von einer Welle des Getriebes in axialer Richtung zentrisch durchgriffen werden *[Fig. 1- Fig. 6, Fig. 8 - Fig. 10].*

12. Mehrstufengetriebe nach einem der Ansprüche 1 bis 9, **dadurch gekennzeichnet, dass** Antriebswelle (AN) und Abtriebswelle(AB) nicht koaxial zueinander, insbesondere achsparallel oder winklig zueinander angeordnet sind *[Fig. 1 - Fig. 6, Fig*. *8, Fig. 10].*

13. Mehrstufengetriebe nach Anspruch 11 und 12, **dadurch gekennzeichnet, dass** die Antriebswelle (AN) bzw. die erste Welle (1) des Getriebes den dritten Planetenradsatz (RS3) in axialer Richtung zentrisch durchgreift *[Fig. 1- Fig. 6*, *Fig. 8, Fig. 10].*

14. Mehrstufengetriebe nach einem der Ansprüche 1 bis 11, **dadurch gekennzeichnet, dass** Antriebswelle (AN) und Abtriebswelle(AB) koaxial zueinander angeordnet sind *[Fig. 9].*

15. Mehrstufengetriebe nach einem der vorstehenden Ansprüche, **dadurch gekennzeichnet, dass** das erste und zweite Schaltelement (A, B) räumlich gesehen im Bereich des ersten Planetenradsatzes (RS1) angeordnet sind *[Fig. 1- Fig. 6, Fig. 8* - *Fig. 10].*

16. Mehrstufengetriebe nach einem der vorstehenden Ansprüche, **dadurch gekennzeichnet, dass** das zweite Schaltelement (B) räumlich gesehen zumindest teilweise radial über dem ersten Planetenradsatz (RS1) angeordnet ist *[Fig. 1 - Fig. 6, Fig. 8* - *Fig. 10].*

17. Mehrstufengetriebe nach einem der vorstehenden Ansprüche, **dadurch gekennzeichnet, dass** das erste Schaltelement (A) räumlich gesehen auf der Seite des ersten Planetenradsatzes (RS1) angeordnet ist, die dem zweiten bzw. vierten Planetenradsatz (RS2, RS4) gegenüberliegt, insbesondere unmittelbar angrenzend an den ersten Planetenradsatz (RS1) *[Fig. 1 - Fig. 6, Fig. 8* - *Fig. 10].*

18. Mehrstufengetriebe nach einem der vorstehenden Ansprüche, **dadurch gekennzeichnet, dass** ein Lamellenpaket des ersten Schaltelementes (A) auf einem kleineren Durchmesser angeordnet ist als ein Lamellenpaket des zweiten Schltelementes (B) *[Fig: 1 - Fig. 6*, *Fig. 8- Fig 10].*

19. Mehrstufengetriebe nach einem der vorstehenden Ansprüche, **dadurch gekennzeichnet, dass** das dritte und fünfte Schaltelement (C, E) räumlich gesehen in einem Bereich axial zwischen dem dritten Planetenradsatz (RS3) und dem zweiten bzw. vierten Planetenradsatz (RS2, RS4) angeordnet sind *[Fig. 1- Fig. 6, Fig. 8, Fig. 9].*

20. Mehrstufengetriebe nach einem der Ansprüche 1 bis 19, **dadurch gekennzeichnet, dass** das dritte und fünfte Schaltelement (C, E) radial betrachtet im Wesentlichen übereinander angeordnet sind, wobei ein Lamellenpaket des fünften Schaltelementes (E) auf einem größeren Durchmesser angeordnet ist als ein Lamellenpaket des dritten Schaltelementes (C) *[Fig. 1 - Fig. 6, Fig. 8]*.

21. Mehrstufengetriebe nach einem der Ansprüche 1 bis 19, **dadurch gekennzeichnet, dass** das dritte und fünfte Schaltelement (C, E) räumlich gesehen im Wesentlichen axial nebeneinander angeordnet sind *[Fig. 9]*.

22. Mehrstufengetriebe nach einem der Ansprüche 1 bis 18, **dadurch gekennzeichnet, dass** das dritte Schaltelement (C) räumlich gesehen auf der Seite des dritten Planetenradsatz (RS3) angeordnet ist, die dem zweiten bzw. vierten Planetenradsatz (RS2, RS4) abgewandt ist *[Fig. 90].*

23. Mehrstufengetriebe nach Anspruch 22, **dadurch gekennzeichnet, dass** das Getriebe eine im Kraftfluss zwischen dem Steg (ST3) des dritten Planetenradsatzes (RS3) und der Abtriebswelle (AB) angeordnete, als Stim- oder Kettentrieb ausgebildete Abtriebsstufe (ABTR) aufweist, dessen mit dem Steg (ST3) des dritten Planetenradsatzes (RS3) verbundenes Stirn oder Kettenrad räumlich gesehen axial zwischen dem dritten Schaltelement (C) und dem dritten Planetenradsatz (RS3) angeordnet ist *[Fig. 10].*

24. Mehrstufengetriebe nach Anspruch 23, **dadurch gekennzeichnet, dass** das mit dem Steg (ST3) des dritten Planetenradsatzes (RS3) verbundenen Stim- oder Kettenrad der Abtriebsstufe (ABTR) an einer getriebegehäusefeste Gehäusewand (GW) verdrehbar gelagert ist, die axial zwischen dem dritten Schaltelement (C) und dem mit dem Steg (ST3) des dritten Planetenradsatzes (RS3) verbundenen Stim- oder Kettenrad der Abtriebsstufe (ABTR) angeordnet ist *[Fig. 10].*

25. Mehrstufengetriebe nach einem der Ansprüche 1 bis 24, **dadurch gekennzeichnet, dass** ein Lamellenpaket des vierten Schaltelementes (D) räumlich gesehen axial zwischen dem dritten Planetenradsatz (RS3) und dem zweiten bzw. vierten Planetenradsatz (RS2, RS4) angeordnet ist, insbesondere unmittelbar angrenzend an den dritten Planetenradsatz (RS3) *[Fig. 1- Fig. 3*, *Fig. 9*, *Fig. 10].*

26. Mehrstufengetriebe nach einem der Ansprüche 1 bis 24, **dadurch gekennzeichnet, dass** ein Lamellenpaket des vierten Schaltelementes (D) räumlich gesehen in einem Bereich axial zwischen dem ersten Planetenradsatz (RS1) und dem zweiten bzw. vierten Planetenradsatz (RS2, RS4) angeordnet ist *[Fig. 4 - Fig. 6*, *Fig. 8].*

27. Mehrstufengetriebe nach einem der Ansprüche 1 bis 24, **dadurch gekennzeichnet, dass** ein Lamellenpaket des vierten Schaltelementes (D) räumlich gesehen zumindest teilweise radial über dem zweiten Planetenradsatz (RS2) angeordnet ist.

28. Mehrstufengetriebe nach einem der Ansprüche 1 bis 20 oder 25, **dadurch gekennzeichnet, dass** das Lamellenpaket des vierten Schalt-elementes (D) räumlich gesehen zumindest teilweise radial über einem Lamellenpaket des dritten Schaltelementes (C) angeordnet ist *[Fig. 9].*

29. Mehrstufengetriebe nach einem der Ansprüche 1 bis 20, 25 oder 28, **dadurch gekennzeichnet, dass** das vierte und fünfte Schaltelement (D, E) räumlich gesehen im Wesentlichen axial nebeneinander angeordnet sind *[Fig. 9].*

30. Mehrstufengetriebe nach einem der Ansprüche 1 bis 20, 25 oder 28, **dadurch gekennzeichnet, dass** das Lamellenpaket des vierten Schaltelementes (D) räumlich gesehen zumindest teilweise radial über einem Lamellenpaket des fünften Schaltelementes (E) angeordnet ist.

31. Mehrstufengetriebe nach einem der vorstehenden Ansprüche ,
**dadurch gekennzeichnet, dass**
■ die erste Welle (1) abschnittsweise zentrisch innerhalb der fünften Welle (5) und abschnittsweise zentrisch innerhalb der siebten Welle (7) verläuft,
■ die fünfte Welle (5) abschnittsweise zentrisch innerhalb der achten Welle (8) verläuft,
■ die achte Welle (8) zentrisch innerhalb der sechste Welle (6) verläuft,
■ die fünfte Welle (5) das dritte und fünfte Schaltelement (C, E) in axialer und radialer Richtung vollständig umgreift, und
■ die sechste Welle (6) den zweiten und vierten Planetenradsatz (RS2, RS4) sowie das vierte und fünfte Schaltelement (D, E) in axialer und radialer Richtung vollständig übergreift
*[Fig. 1 - Fig. 6*, *Fig. 8* - *Fig. 10].*

32. Mehrstufengetriebe nach einem der vorstehenden Ansprüche, **dadurch gekennzeichnet, dass** die sechste Welle (6) das dritte Schaltelement (C) in axialer und radialer Richtung vollständig übergreift *[Fig. 1 - Fig.* 6, *Fig.* 8, *Fig. 9].*

33. Mehrstufengetriebe nach einem der vorstehenden Ansprüche, **dadurch gekennzeichnet, dass** die achte Welle (8) den zweiten und vierten Planetenradsatz (RS2, RS4) sowie das fünfte Schaltelement (E) in axialer und radialer Richtung vollständig übergreift
*[Fig. 1 - Fig.* 3, *Fig.* 9, *Fig. 10].*

34. Mehrstufengetriebe nach einem der vorstehenden Ansprüche, **dadurch gekennzeichnet, dass** die achte Welle (8) das dritte Schaltelement (C) in axialer und radialer Richtung vollständig übergreift *[Fig.* 1- *Fig. 3].*

35. Mehrstufengetriebe nach einem der vorstehenden Ansprüche, **dadurch gekennzeichnet, dass** die zweite Welle (2) den zweiten und vierten Planetenradsatz (RS2, RS4) sowie das dritte und fünfte Schaltelement (C, E) in axialer und radialer Richtung vollständig übergreift *[Fig. 8].*

36. Mehrstufengetriebe nach einem der vorstehenden Ansprüche, **dadurch gekennzeichnet, dass** zwischen den Wellen (AN, AB, 1, 2, 3, 4, 5, 6, 7, 8) und dem Gehäuse (GG) des Getriebes zusätzliche Freiläufe einsetzbar sind.

37. Mehrstufengetriebe nach einem der Ansprüche 1 bis 36, **dadurch gekennzeichnet, dass** ein Antrieb des Getriebes auf der dem ersten Planetenradsatz (RS1) gegenüberliegenden Seite des Getriebegehäuses (GG) angeordnet ist *[Fig 1 - Fig. 6, Fig. 8].*

38. Mehrstufengetriebe nach einem der Ansprüche 1 bis 36, **dadurch gekennzeichnet, dass** ein Antrieb des Getriebes auf der dem dritten Planetenradsatz (RS3) gegenüberliegenden Seite des Getriebegehäuses (GG) angeordnet ist *[Fig. 9].*

39. Mehrstufengetriebe nach einem der vorstehenden Ansprüche, **dadurch gekennzeichnet, dass** die Antriebswelle (AN) durch ein Kupplungselement von einem Antriebs-Motor des Kraftfahrzeugs trennbar ist.

40. Mehrstufengetriebe nach einem der vorstehenden Ansprüche, **dadurch gekennzeichnet, dass** in Kraftflussrichtung hinter dem Getriebe ein externes Anfahrelement angeordnet ist, wobei die Antriebswelle (AN) verdrehfest oder drehelastisch mit einer Kurbelwelle des Antriebs-Motors verbunden ist.

41. Mehrstufengetriebe nach Anspruch 39 oder 40, **dadurch gekennzeichnet, dass** das Kupplungselement bzw. das Anfahrelement als hydrodynamischer Wandler oder hydraulische Kupplung oder trockene Anfahrkupplung oder nasse Anfahrkupplung oder Magnetpulverkupplung oder Fliehkraftkupplung ausgebildet ist.

42. Mehrstufengetriebe nach einem der vorstehenden Ansprüche, **dadurch gekennzeichnet, dass** ein Anfahren des Kraftfahrzeugs mittels eines getriebeintemen Schaltelementes erfolgt, wobei die Antriebswelle (AN) ständig verdrehfest oder drehelastisch mit der Kurbelwelle des Antriebs-Motors verbunden ist.

43. Mehrstufengetriebe nach Anspruch 42, **dadurch gek**e**nnzeichnet,** dass das Anfahren des Kraftfahrzeug in Vorwarts- und Rückwärtsfahrtrichtung mittels des gleichen getriebeintemen Schaltelementes erfolgt, insbesondere mittels des ersten oder des zweiten Schaltelementes (A, B).

44. Mehrstufengetriebe nach einem der vorstehenden Ansprüche, **dadurch gekennzeichnet, dass** zwischen Antriebs-Motor und Getriebe ein Torsionsschwingungsdämpfer angeordnet ist.

45. Mehrstufengetriebe nach einem der vorstehenden Ansprüche, **dadurch gekennzeichnet, dass** an jeder Welle (AN, AB, 1, 2, 3, 4, 5, 6, 7, 8) des Getriebes eine verschleißfreie Bremse oder ein Nebenabtrieb zum Antrieb von zusätzlichen Aggregaten oder eine elektrische Maschine als Generator und/oder als zusätzliche Antriebsmaschine anbringbar ist.

46. Mehrstufengetriebe nach einem der vorstehenden Ansprüche, **dadurch gekennzeichnet, dass** als Schaltelemente (A, B, C, D, E) reibschlüssige Kupplungen bzw. reibschlüssige Bremsen - insbesondere -Lamellenkupplungen, Bandbremsen und/oder Konuskupplungen - und/oder formschlüssige Kupplungen bzw. formschlüssige Bremsen - insbesondere Konuskupplungen und/oder Klauenkupplungen - vorgesehen sind.

## Claims

1. Multi-step transmission of epicyclic type of construction, in particular automatic transmission for a motor vehicle, comprising a drive shaft (AN) and an output shaft (AB), four planet gear sets (RS1, RS2, RS3, RS4), at least eight rotatable shafts (1, 2, 3, 4, 5, 6, 7, 8) and five shift elements (A, B, C, D, E), the selective engagement of which gives rise to different transmission ratios between the drive shaft (AN) and the output shaft (AB), so that eight forward gears and at least one reverse gear can be implemented,
• a web (ST4) of the fourth planet gear set (RS4) and the drive shaft (AN) being connected fixedly in terms of rotation to one another and forming the first shaft (1),
• a web (ST3) of the third planet gear set (RS3) and the output shaft (AB) being connected to one another and forming the second shaft (2),
• a sun gear (SO1) of the first planet gear set (RS1) and a sun gear (S04) of the fourth planet gear set (RS4) being connected fixedly in terms of rotation to one another and forming the third shaft (3),
• an internal gear (HO1) of the first planet gear set (RS1) forming the fourth shaft (4),
• an internal gear (H02) of the second planet gear set (RS2) and a sun gear (S03) of the third planet gear set (RS3) being connected fixedly in terms of rotation to one another and forming the fifth shaft (5),
• a web (ST1) of the first planet gear set (RS1) and an internal gear (H03) of the third planet gear set (RS3) being connected fixedly in terms of rotation to one another and forming the sixth shaft (6),
• a sun gear (S02) of the second planet gear set (RS2) and an internal gear (H04) of the fourth planet gear set (RS4) being connected fixedly in terms of rotation to one another and forming the seventh shaft (7) and
• a web (ST2) of the second planet gear set (RS2) forming the eighth shaft (8),
• the first shift element (A) being arranged in the force flux between the third shaft (3) and a case (GG) of the transmission,
• the second shift element (B) being arranged in the force flux between the fourth shaft (4) and the case (GG) of the transmission,
• the third shift element (C) being arranged in the force flux between the fifth shaft (5) and the first shaft (1),
• the fourth shift element (D) being arranged in the force flux either between the eighth shaft (8) and the second shaft (2) or between the eighth shaft (8) and the sixth shaft (6), and
• the fifth shift element (E) being arranged in the force flux either between the seventh shaft (7) and the fifth shaft (5) or between the seventh shaft (7) and the eighth shaft (8) or between the fifth shaft (5) and the eighth shaft (8), and
• the second and the fourth planet gear set (RS2, RS4) being arranged radially one above the other in one plane, as seen in the axial direction,
• the fourth planet gear set (RS4) being arranged centrically within the second planet gear set (RS2), and
• the second and the fourth planet gear set (RS2, RS4) being arranged, as seen spatially, in a region axially between the first and the third planet gear set (RS1, RS3).

2. Multi-step transmission according to Claim 1, **characterized in that** the internal gear (H04) of the fourth planet gear set (RS4) simultaneously forms the sun gear (S02) of the second planet gear set (RS2), the internal gear (H04) of the fourth planet gear set (RS4) and the sun gear (S02) of the second planet gear set (RS2) being produced in one piece as a common component.

3. Multi-step transmission according to Claim 1, **characterized in that** the internal gear (H04) of the fourth planet gear set (RS4) and the sun gear (S02) of the second planet gear set (RS2) are in each case produced as a separate component and connected to one another.

4. Multi-step transmission according to Claim 3, **characterized in that** the internal gear (H04) of the fourth planet gear set (RS4) and the sun gear (S02) of the second planet gear set (RS2) are connected fixedly in terms of rotation to one another.

5. Multi-step transmission according to Claim 3, **characterized in that** the internal gear (H04) of the fourth planet gear set (RS4) and the sun gear (S02) of the second planet gear set (RS2) are connected elastically in terms of rotation to one another.

6. Multi-step transmission according to one of the preceding claims, **characterized in that** the web (ST4) of the fourth planet gear set (RS4) is mounted radially, via the drive shaft (AN) or the first shaft (1) of the transmission, on the transmission case (GG) or a hub fixed to the transmission case or radially in the third shaft (3) of the transmission.

7. Multi-step transmission according to one of the preceding claims, **characterized in that** the web (ST2) of the second planet gear set (RS2) is mounted radially on the third shaft (3) of the transmission.

8. Multi-step transmission according to one of the preceding claims, **characterized in that**
• the first forward gear is obtained by the closing of the first, second and third shift element (A, B, C),
• the second forward gear is obtained by the closing of the first, second and fifth shift element (A, B, E),
• the third forward gear is obtained by the closing of the second, third and fifth shift element (B, C, E),
• the fourth forward gear is obtained by the closing of the second, fourth and fifth shift element (B, D, E),
• the fifth forward gear is obtained by the closing of the second, third and fourth shift element (B, C, D),
• the sixth forward gear is obtained by the closing of the third, fourth and fifth shift element (C, D, E),
• the seventh forward gear is obtained by the closing of the first, third and fourth shift element (A, C, D), and
• the eighth forward gear is obtained by the closing of the first, fourth and fifth shift element (A, D, E).

9. Multi-step transmission according to one of the preceding claims, **characterized in that** a reverse gear is obtained by the closing of the first, second and fourth shift element (A, B, D).

10. Multi-step transmission according to one of the preceding claims, **characterized in that** all four planet gear sets (RS1, RS2, RS3, RS4) are designed as minus planet gear sets.

11. Multi-step transmission according to one of the preceding claims, **characterized in that** the first, third and fourth planet gear set (RS1, RS3, RS4) are in each case extended through centrically in the axial direction at most by one shaft of the transmission *[Fig. 1 - Fig. 6, Fig. 8 - Fig. 10].*

12. Multi-step transmission according to one of Claims 1 to 9, **characterized in that** the drive shaft (AN) and the output shaft (AB) are not arranged coaxially with respect to one another, in particular are arranged axially parallel or angularly with respect to one another *[Fig. 1 - Fig. 6, Fig. 8, Fig. 10].*

13. Multi-step transmission according to Claims 11 and 12, **characterized in that** the drive shaft (AN) or the first shaft (1) of the transmission extends centrically through the third planet gear set (RS3) in the axial direction *[Fig. 1 - Fig. 6, Fig. 8, Fig. 10].*

14. Multi-step transmission according to one of Claims 1 to 11, **characterized in that** the drive shaft (AN) and output shaft (AB) are arranged coaxially with respect to one another *[Fig. 9].*

15. Multi-step transmission according to one of the preceding claims, **characterized in that** the first and second shift elements (A, B) are arranged, as seen spatially, in the region of the first planet gear set (RS1) *[Fig. 1 - Fig. 6, Fig. 8 - Fig. 10].*

16. Multi-step transmission according to one of the preceding claims, **characterized in that** the second shift element (B) is arranged, as seen spatially, at least partially radially above the first planet gear set (RS1) *[Fig. 1 - Fig. 6, Fig. 8 - Fig. 10].*

17. Multi-step transmission according to one of the preceding claims, **characterized in that** the first shift element (A) is arranged, as seen spatially, on that side of the first planet gear set (RS1) which lies opposite the second or fourth planet gear set (RS2, RS4), in particular immediately adjoining the first planet gear set (RS1) *[Fig. 6, Fig. 8 - Fig. 10].*

18. Multi-step transmission according to one of the preceding claims, **characterized in that** a disc stack of the first shift element (A) is arranged on a smaller diameter than a disc stack of the second shift element (B) *[Fig. 1 - Fig. 6, Fig. 8 - Fig. 10].*

19. Multi-step transmission according to one of the preceding claims, **characterized in that** the third and fifth shift element (C, E) are arranged, as seen spatially, in a region axially between the third planet gear set (RS3) and the second or fourth planet gear set (RS2, RS4) *[Fig. 1 - Fig. 6, Fig. 8 - Fig. 9].*

20. Multi-step transmission according to one of Claims 1 to 19, **characterized in that** the third and fifth shift elements (C, E), as seen radially, are arranged substantially one above the other, a disc stack of the fifth shift element (E) being arranged on a larger diameter than a disc stack of the third shift element (C) *[Fig. 1 - Fig. 6, Fig. 8].*

21. Multi-step transmission according to one of Claims 1 to 19, **characterized in that** the third and fifth shift elements (C, E) are arranged, as seen spatially, substantially axially adjacent to one another *[Fig. 9].*

22. Multi-step transmission according to one of Claims 1 to 18, **characterized in that** the third shift element (C) is arranged, as seen spatially, on that side of the third planet gear set (RS3) which faces away from the second and fourth planet gear sets (RS2, RS4) *[Fig.* 10] .

23. Multi-step transmission according to Claim 22, **characterized in that** the transmission has an output stage (ABTR) which is arranged in the force flux between the web (ST3) of the third planet gear set (RS3) and the output shaft (AB) and which is designed as a spur gear drive or chain drive and whose spur gear or sprocket which is connected to the web (ST3) of the third planet gear set (RS3) is arranged, as seen spatially, axially between the third shift element (C) and the third planet gear set (RS3) *[Fig. 10].*

24. Multi-step transmission according to Claim 23, **characterized in that** the spur gear or sprocket, which is connected to the web (ST3) of the third planet gear set (RS3), of the output stage (ABTR) is rotatably mounted on a housing wall (GW) which is fixed with respect to the transmission housing and which is arranged axially between the third shift element (C) and the spur gear or sprocket, which is connected to the web (ST3) of the third planet gear set (RS3), of the output stage (ABTR) *[Fig. 10].*

25. Multi-step transmission according to one of Claims 1 to 24, **characterized in that** a disc stack of the fourth shift element (D) is arranged, as seen spatially, axially between the third planet gear set (RS3) and the second and fourth planet gear sets (RS2, RS4), in particular directly adjacent to the third planet gear set (RS3) *[Fig. 1 - Fi g . 3, Fi g . 9, Fig. 10].*

26. Multi-step transmission according to one of Claims 1 to 24, **characterized in that** a disc stack of the fourth shift element (D) is arranged, as seen spatially, in a region axially between the first planet gear set (RS1) and the second and fourth planet gear sets (RS2, RS4) *[Fig.* 4 - *Fig. 6, Fig. 8].*

27. Multi-step transmission according to one of Claims 1 to 24, **characterized in that** a disc stack of the fourth shift element (D) is arranged, as seen spatially, at least partially radially above the second planet gear set (RS2).

28. Multi-step transmission according to one of Claims 1 to 20 or 25, **characterized in that** the disc stack of the fourth shift element (D) is arranged, as seen spatially, at least partially radially above a disc stack of the third shift element (C) *[Fig. 9].*

29. Multi-step transmission according to one of Claims 1 to 20, 25 or 28, **characterized in that** the fourth and fifth shift elements (D, E) are arranged, as seen spatially, substantially axially adjacent to one another *[Fig. 9].*

30. Multi-step transmission according to one of Claims 1 to 20, 25 or 28, **characterized in that** the disc stack of the fourth shift element (D) is arranged, as seen spatially, at least partially radially above a disc stack of the fifth shift element (E).

31. Multi-step transmission according to one of the preceding claims, **characterized in that**
• the first shaft (1) runs partially centrically within the fifth shaft (5) and partially centrically within the seventh shaft (7),
• the fifth shaft (5) runs partially centrically within the eighth shaft (8),
• the eighth shaft (8) runs centrically within the sixth shaft (6),
• the fifth shaft (5) completely surrounds the third and fifth shift element (C, E) in the axial and the radial direction, and
• the sixth shaft (6) engages completely over the second and fourth planet gear sets (RS2, RS4) and the fourth and fifth shift elements (D, E) in the axial and the radial direction [*Fig*. *1* - *Fig. 6, Fig. 8* - *Fig. 10].*

32. Multi-step transmission according to one of the preceding claims, **characterized in that** the sixth shaft (6) engages completely over the third shift element (C) in the axial and the radial direction [*Fig*. *1* - *Fig. 6, Fig. 8*, *Fig.* 9].

33. Multi-step transmission according to one of the preceding claims, **characterized in that** the eighth shaft (8) engages completely over the second and fourth planet gear sets (RS2, RS4) and the fifth shift element (E) in the axial and the radial direction [*Fig*. *1 - Fig.* 3, *Fig.* 9, *Fig. 10].*

34. Multi-step transmission according to one of the preceding claims, **characterized in that** the eighth shaft (8) engages completely over the third shift element (C) in the axial and the radial direction [*Fig*. *1* - *Fig. 3*].

35. Multi-step transmission according to one of the preceding claims, **characterized in that** the second shaft (2) engages completely over the second and fourth planet gear sets (RS2, RS4) and the third and fifth shift elements (C, E) in the axial and the radial direction [*Fig*. *8].*

36. Multi-step transmission according to one of the preceding claims, **characterized in that** additional freewheels can be installed between the shafts (AN, AB, 1, 2, 3, 4, 5, 6, 7, 8) and the housing (GG) of the transmission.

37. Multi-step transmission according to one of Claims 1 to 36, **characterized in that** a drive of the transmission is arranged on that side of the transmission case (GG) which lies opposite the first planet gear set (RS1) *[Fig. 1 - Fig.* 6, *Fig. 8].*

38. Multi-step transmission according to one of Claims 1 to 36, **characterized in that** a drive of the transmission is arranged on that side of the transmission case (GG) which lies opposite the third planet gear set (RS3) *[Fig. 9].*

39. Multi-step transmission according to one of the preceding claims, **characterized in that** the drive shaft (AN) is separable from an engine of the motor vehicle by means of a clutch element.

40. Multi-step transmission according to one of the preceding claims, **characterized in that** an external starting element is arranged downstream of the transmission in the force-flux direction, the drive shaft (AN) being connected fixedly in terms of rotation or elastically in terms of rotation to a crankshaft of the drive engine.

41. Multi-step transmission according to Claim 39 or 40, **characterized in that** the clutch element or the starting element is designed as a hydrodynamic converter or hydraulic clutch or dry starting clutch or wet starting clutch or magnetic-powder clutch or centrifugal clutch.

42. Multi-step transmission according to one of the preceding claims, **characterized in that** a starting of the motor vehicle takes place by means of an internal-to-transmission shift element, the drive shaft (AN) being constantly connected fixedly in terms of rotation or elastically in terms of rotation to the crankshaft of the engine.

43. Multi-step transmission according to Claim 42, **characterized in that** the starting of the motor vehicle in the forward and the reverse direction of travel takes place by means of the same internal-to-transmission shift element, in particular by means of the first or the second shift element (A, B).

44. Multi-step transmission according to one of the preceding claims, **characterized in that** a torsional vibration damper is arranged between the engine and transmission.

45. Multi-step transmission according to one of the preceding claims, **characterized in that** a wear-free brake or a secondary output for the drive of additional assemblies or an electric machine as a generator and/or as an additional driving machine can be mounted on each shaft (AN, AB, 1, 2, 3, 4, 5, 6, 7, 8) of the transmission.

46. Multi-step transmission according to one of the preceding claims, **characterized in that** the shift elements (A, B, C, D, E) provided are frictional clutches or frictional brakes - in particular, multiple-disc clutches, band brakes and/or cone clutches - and/or positive clutches or positive brakes - in particular, cone clutches and/or dog clutches.

## Revendications

1. Transmission à plusieurs étages de construction planétaire, en particulier transmission automatique pour un véhicule automobile, comprenant un arbre d'entraînement (AN) et un arbre de prise de force (AB), quatre trains planétaires (RS1, RS2, RS3, RS4), au moins huit arbres rotatifs (1, 2, 3, 4, 5, 6, 7, 8) ainsi que cinq éléments de commutation (A, B, C, D, E) dont l'engagement sélectif provoque différents rapports de démultiplication entre l'arbre d'entraînement (AN) et l'arbre de prise de force (AB), de sorte que huit rapports de marche avant et au moins un rapport de marche arrière puissent être réalisés,
- un porte-satellites (ST4) du quatrième train planétaire (RS4) et l'arbre d'entraînement (AN) étant connectés l'un à l'autre de manière solidaire en rotation et formant le premier arbre (1),
- un porte-satellites (ST3) du troisième train planétaire (RS3) et l'arbre de prise de force (AB) étant connectés l'un à l'autre et formant le deuxième arbre (2),
- une roue solaire (SO1) du premier train planétaire (RS1) et une roue solaire (S04) du quatrième train planétaire (RS4) étant connectées l'une à l'autre de manière solidaire en rotation et formant le troisième arbre (3),
- une couronne (HO1) du premier train planétaire (RS1) formant le quatrième arbre (4),
- une couronne (H02) du deuxième train planétaire (RS2) et une roue solaire (SO3) du troisième train planétaire (RS3) étant connectées l'une à l'autre de manière solidaire en rotation et formant le cinquième arbre (5),
- un porte-satellites (ST1) du premier train planétaire (RS1) et une couronne (H03) du troisième train planétaire (RS3) étant connectés l'un à l'autre de manière solidaire en rotation et formant le sixième arbre (6),
- une roue solaire (S02) du deuxième train planétaire (RS2) et une couronne (H04) du quatrième train planétaire (RS4) étant connectées l'une à l'autre de manière solidaire en rotation et formant le septième arbre (7) et
- un porte-satellites (ST2) du deuxième train planétaire (RS2) formant le huitième arbre (8),
- le premier élément de commutation (A) étant disposé dans le flux de forces entre le troisième arbre (3) et un boîtier (GG) de la transmission,
- le deuxième élément de commutation (B) étant disposé dans le flux de forces entre le quatrième arbre (4) et le boîtier (GG) de la transmission,
- le troisième élément de commutation (C) étant disposé dans le flux de forces entre le cinquième arbre (5) et le premier arbre (1),
- le quatrième élément de commutation (D) étant disposé dans le flux de forces soit entre le huitième arbre (8) et le deuxième arbre (2) soit entre le huitième arbre (8) et le sixième arbre (6), et
- le cinquième élément de commutation (E) étant disposé dans le flux de forces entre le septième arbre (7) et le cinquième arbre (5), entre le septième arbre (7) et le huitième arbre (8), ou entre le cinquième arbre (5) et le huitième arbre (8), et
- le deuxième et le quatrième train planétaire (RS2, RS4) étant disposés radialement l'un au-dessus de l'autre dans un plan, vu dans la direction axiale,
- le quatrième train planétaire (RS4) étant disposé centralement à l'intérieur du deuxième train planétaire (RS2), et
- le deuxième et le quatrième train planétaire (RS2, RS4), vus spatialement, étant disposés dans une région axialement entre le premier et le troisième train planétaire (RS1, RS3).

2. Transmission à plusieurs étages selon la revendication 1, **caractérisée en ce que** la couronne (H04) du quatrième train planétaire (RS4) forme en même temps la roue solaire (S02) du deuxième train planétaire (RS2), la couronne (H04) du quatrième train planétaire (RS4) et la roue solaire (S02) du deuxième train planétaire (RS2) étant réalisées d'une seule pièce sous forme d'un composant commun.

3. Transmission à plusieurs étages selon la revendication 1, **caractérisée en ce que** la couronne (H04) du quatrième train planétaire (RS4) et la roue solaire (S02) du deuxième train planétaire (RS2) sont à chaque fois réalisées sous forme de composant séparé et sont connectées l'une à l'autre.

4. Transmission à plusieurs étages selon la revendication 3, **caractérisée en ce que** la couronne (H04) du quatrième train planétaire (RS4) et la roue solaire (S02) du deuxième train planétaire (RS2) sont connectées l'une à l'autre de manière solidaire en rotation.

5. Transmission à plusieurs étages selon la revendication 3, **caractérisée en ce que** la couronne (H04) du quatrième train planétaire (RS4) et la roue solaire (S02) du deuxième train planétaire (RS2) sont connectées l'une à l'autre de manière élastique en rotation.

6. Transmission à plusieurs étages selon l'une quelconque des revendications précédentes, **caractérisée en ce que** le porte-satellites (ST4) du quatrième train planétaire (RS4) est monté par le biais de l'arbre d'entraînement (AN) ou du premier arbre (1) de la transmission radialement sur le boîtier (GG) de la transmission ou sur un moyeu fixé au boîtier de la transmission, ou radialement dans le troisième arbre (3) de la transmission.

7. Transmission à plusieurs étages selon l'une quelconque des revendications précédentes, **caractérisée en ce que** le porte-satellites (ST2) du deuxième train planétaire (RS2) est monté radialement sur le troisième arbre (3) de la transmission.

8. Transmission à plusieurs étages selon l'une quelconque des revendications précédentes, **caractérisée en ce que**
- le premier rapport de marche avant est obtenu par fermeture des premier, deuxième et troisième éléments de commutation (A, B, C),
- le deuxième rapport de marche avant est obtenu par fermeture des premier, deuxième et cinquième éléments de commutation (A, B, E),
- le troisième rapport de marche avant est obtenu par fermeture des deuxième, troisième et cinquième éléments de commutation (B, C, E),
- le quatrième rapport de marche avant est obtenu par fermeture des deuxième, quatrième et cinquième éléments de commutation (B, D, E),
- le cinquième rapport de marche avant est obtenu par fermeture des deuxième, troisième et quatrième éléments de commutation (B, C, D),
- le sixième rapport de marche avant est obtenu par fermeture des troisième, quatrième et cinquième éléments de commutation (C, D, E),
- le septième rapport de marche avant est obtenu par fermeture des premier, troisième et quatrième éléments de commutation (A, C, D), et
- le huitième rapport de marche avant est obtenu par fermeture des premier, quatrième et cinquième éléments de commutation (A, D, E).

9. Transmission à plusieurs étages selon l'une quelconque des revendications précédentes, **caractérisée en ce qu'**un rapport de marche arrière est obtenu par fermeture des premier, deuxième et quatrième éléments de commutation (A, B, D).

10. Transmission à plusieurs étages selon l'une quelconque des revendications précédentes, **caractérisée en ce que** tous les quatre trains planétaires (RS1, RS2, RS3, RS4) sont réalisés sous forme de trains planétaires négatifs.

11. Transmission à plusieurs étages selon l'une quelconque des revendications précédentes, **caractérisée en ce que** les premier, troisième et quatrième trains planétaires (RS1, RS3, RS4) sont traversés centralement dans la direction axiale à chaque fois au plus par un arbre de la transmission [fig. 1 - fig. 6, fig. 8 - fig. 10].

12. Transmission à plusieurs étages selon l'une quelconque des revendications 1 à 9, **caractérisée en ce que** l'arbre d'entraînement (AN) et l'arbre de prise de force (AB) ne sont pas disposés coaxialement mais avec leurs axes parallèles ou suivant un certain angle l'un par rapport à l'autre [fig. 1 - fig. 6, fig. 8, fig. 10].

13. Transmission à plusieurs étages selon les revendications 11 et 12, **caractérisée en ce que** l'arbre d'entraînement (AN) ou le premier arbre (1) de la transmission vient en prise centralement dans la direction axiale à travers le troisième train planétaire (RS3) [fig. 1 - fig. 6, fig. 8, fig. 10].

14. Transmission à plusieurs étages selon l'une quelconque des revendications 1 à 11, **caractérisée en ce que** l'arbre d'entraînement (AN) et l'arbre de prise de force (AB) sont disposés coaxialement l'un par rapport à l'autre [fig. 9].

15. Transmission à plusieurs étages selon l'une quelconque des revendications précédentes, **caractérisée en ce que** le premier et le deuxième élément de commutation (A, B), vus spatialement, sont disposés dans la région du premier train planétaire (RS1) [fig. 1 - fig. 6, fig. 8 - fig. 10].

16. Transmission à plusieurs étages selon l'une quelconque des revendications précédentes, **caractérisée en ce que** le deuxième élément de commutation (B), vu spatialement, est disposé au moins en partie radialement au-dessus du premier train planétaire (RS1) [fig. 1 - fig. 6, fig. 8 - fig. 10].

17. Transmission à plusieurs étages selon l'une quelconque des revendications précédentes, **caractérisée en ce que** le premier élément de commutation (A), vu spatialement, est disposé du côté du premier train planétaire (RS1) qui est opposé au deuxième ou au quatrième train planétaire (RS2, RS4), notamment en position immédiatement adjacente au premier train planétaire (RS1) [fig. 1 - fig. 6, fig. 8 - fig. 10].

18. Transmission à plusieurs étages selon l'une quelconque des revendications précédentes, **caractérisée en ce qu'**un paquet de disques du premier élément de commutation (A) est disposé sur un plus petit diamètre qu'un paquet de disques du deuxième élément de commutation (B) [fig. 1 - fig. 6, fig. 8 - fig. 10].

19. Transmission à plusieurs étages selon l'une quelconque des revendications précédentes, **caractérisée en ce que** le troisième et le cinquième élément de commutation (C, E), vus spatialement, sont disposés dans une région axialement entre le troisième train planétaire (RS3) et le deuxième ou le quatrième train planétaire (RS2, RS4) [fig. 1 - fig. 6, fig. 8, fig. 9] .

20. Transmission à plusieurs étages selon l'une quelconque des revendications 1 à 19, **caractérisée en ce que** le troisième et le cinquième élément de commutation (C, E), considérés radialement, sont disposés substantiellement l'un au-dessus de l'autre, un paquet de disques du cinquième élément de commutation (E) étant disposé sur un plus grand diamètre qu'un paquet de disques du troisième élément de commutation (C) [fig. 1 - fig. 6, fig. 8].

21. Transmission à plusieurs étages selon l'une quelconque des revendications 1 à 19, **caractérisée en ce que** le troisième et le cinquième élément de commutation (C, E), vus spatialement, sont disposés essentiellement axialement l'un à côté de l'autre [fig. 9].

22. Transmission à plusieurs étages selon l'une quelconque des revendications 1 à 18, **caractérisée en ce que** le troisième élément de commutation (C), vu spatialement, est disposé du côté du troisième train planétaire (RS3) qui est opposé au deuxième ou au quatrième train planétaire (RS2, RS4) [fig. 10].

23. Transmission à plusieurs étages selon la revendication 22, **caractérisée en ce que** la transmission présente un étage de prise de force (ABTR) réalisé sous forme d'entraînement à pignons droits ou à chaîne, disposé dans le flux de forces entre le porte-satellites (ST3) du troisième train planétaire (RS3) et l'arbre de prise de force (AB), dont le pignon droit ou la roue à chaîne connecté(e) au porte-satellites (ST3) du troisième train planétaire (RS3), vu spatialement, est disposé(e) axialement entre le troisième élément de commutation (C) et le troisième train planétaire (RS3) [fig. 10] .

24. Transmission à plusieurs étages selon la revendication 23, **caractérisée en ce que** le pignon droit ou la roue à chaîne de l'étage de prise de force (ABTR) connecté(e) au porte-satellites (ST3) du troisième train planétaire (RS3) est monté(e) de manière rotative sur une paroi de boîtier (GW) fixée au boîtier de la transmission, laquelle est disposée axialement entre le troisième élément de commutation (C) et le pignon droit ou la roue à chaîne de l'étage de prise de force (ABTR) connecté(e) au porte-satellites (ST3) du troisième train planétaire (RS3) [fig. 10].

25. Transmission à plusieurs étages selon l'une quelconque des revendications 1 à 24, **caractérisée en ce qu'**un paquet de disques du quatrième élément de commutation (D), vu spatialement, est disposé axialement entre le troisième train planétaire (RS3) et le deuxième ou le quatrième train planétaire (RS2, RS4), notamment en position immédiatement adjacente au troisième train planétaire (RS3) [fig. 1 - fig. 3, fig. 9, fig. 10].

26. Transmission à plusieurs étages selon l'une quelconque des revendications 1 à 24, **caractérisée en ce qu'**un paquet de disques du quatrième élément de commutation (D), vu spatialement, est disposé dans une région axialement entre le premier train planétaire (RS1) et le deuxième ou le quatrième train planétaire (RS2, RS4) [fig. 4 - fig. 6, fig. 8] .

27. Transmission à plusieurs étages selon l'une quelconque des revendications 1 à 24, **caractérisée en ce qu'**un paquet de disques du quatrième élément de commutation (D), vu spatialement, est disposé au moins en partie radialement au-dessus du deuxième train planétaire (RS2).

28. Transmission à plusieurs étages selon l'une quelconque des revendications 1 à 20 ou 25, **caractérisée en ce que** le paquet de disques du quatrième élément de commutation (D), vu spatialement, est disposé au moins en partie radialement au-dessus d'un paquet de disques du troisième élément de commutation (C) [fig. 9].

29. Transmission à plusieurs étages selon l'une quelconque des revendications 1 à 20, 25 ou 28, **caractérisée en ce que** le quatrième et le cinquième élément de commutation (D, E), vus spatialement, sont disposés essentiellement axialement l'un à côté de l'autre [fig. 9].

30. Transmission à plusieurs étages selon l'une quelconque des revendications 1 à 20, 25 ou 28, **caractérisée en ce que** le paquet de disques du quatrième élément de commutation (D), vu spatialement, est disposé au moins en partie radialement au-dessus d'un paquet de disques du cinquième élément de commutation (E).

31. Transmission à plusieurs étages selon l'une quelconque des revendications précédentes, **caractérisée en ce que**
- le premier arbre (1) s'étend en partie centralement à l'intérieur du cinquième arbre (5) et en partie centralement à l'intérieur du septième arbre (7),
- le cinquième arbre (5) s'étend en partie centralement à l'intérieur du huitième arbre (8),
- le huitième arbre (8) s'étend centralement à l'intérieur du sixième arbre (6),
- le cinquième arbre (5) vient complètement en prise autour du troisième et du cinquième élément de commutation (C, E) dans la direction axiale et radiale, et
- le sixième arbre (6) vient complètement en prise au-dessus du deuxième et du quatrième train planétaire (RS2, RS4) ainsi que du quatrième et du cinquième élément de commutation (D, E) dans la direction axiale et radiale [fig. 1 - fig. 6, fig. 8 - fig. 10].

32. Transmission à plusieurs étages selon l'une quelconque des revendications précédentes, **caractérisée en ce que** le sixième arbre (6) vient en prise complètement au-dessus du troisième élément de commutation (C) dans la direction axiale et radiale [fig. 1 - fig. 6, fig. 8, fig. 9] .

33. Transmission à plusieurs étages selon l'une quelconque des revendications précédentes, **caractérisée en ce que** le huitième arbre (8) vient en prise complètement au-dessus du deuxième et du quatrième train planétaire (RS2, RS4) ainsi que du cinquième élément de commutation (E) dans la direction axiale et radiale [fig. 1 - fig. 3, fig. 9, fig. 10].

34. Transmission à plusieurs étages selon l'une quelconque des revendications précédentes, **caractérisée en ce que** le huitième arbre (8) vient en prise complètement au-dessus du troisième élément de commutation (C) dans la direction axiale et radiale [fig. 1 - fig. 3].

35. Transmission à plusieurs étages selon l'une quelconque des revendications précédentes, **caractérisée en ce que** le deuxième arbre (2) vient en prise complètement au-dessus du deuxième et du quatrième train planétaire (RS2, RS4) ainsi que du troisième et du cinquième élément de commutation (C, E) dans la direction axiale et radiale [fig. 8].

36. Transmission à plusieurs étages selon l'une quelconque des revendications précédentes, **caractérisée en ce qu'**entre les arbres (AN, AB, 1, 2, 3, 4, 5, 6, 7, 8) et le boîtier (GG) de la transmission peuvent être insérées des roues libres supplémentaires.

37. Transmission à plusieurs étages selon l'une quelconque des revendications 1 à 36, **caractérisée en ce qu'**un entraînement de la transmission est disposé du côté du boîtier de transmission (GG) opposé au premier train planétaire (RS1) [fig. 1 - fig. 6, fig. 8].

38. Transmission à plusieurs étages selon l'une quelconque des revendications 1 à 36, **caractérisée en ce qu'**un entraînement de la transmission est disposé du côté du boîtier de transmission (GG) opposé au troisième train planétaire (RS3) [fig. 9].

39. Transmission à plusieurs étages selon l'une quelconque des revendications précédentes, **caractérisée en ce que** l'arbre d'entraînement (AN) peut être séparé par un élément d'embrayage d'un moteur d'entraînement du véhicule automobile.

40. Transmission à plusieurs étages selon l'une quelconque des revendications précédentes, **caractérisée en ce que** dans la direction du flux de forces derrière la transmission est disposé un élément de démarrage extérieur, l'arbre d'entraînement (AN) étant connecté de manière solidaire en rotation ou élastique en rotation à un vilebrequin du moteur d'entraînement.

41. Transmission à plusieurs étages selon la revendication 39 ou 40, **caractérisée en ce que** l'élément d'embrayage ou l'élément de démarrage est réalisé sous forme de convertisseur hydrodynamique ou d'embrayage hydraulique ou d'embrayage de démarrage sec ou d'embrayage de démarrage humide ou d'embrayage à poudre magnétique ou d'embrayage à force centrifuge.

42. Transmission à plusieurs étages selon l'une quelconque des revendications précédentes, **caractérisée en ce qu'**un démarrage du véhicule automobile a lieu au moyen d'un élément de commutation interne à la transmission, l'arbre d'entraînement (AN) étant connecté constamment de manière solidaire en rotation ou élastique en rotation au vilebrequin du moteur d'entraînement.

43. Transmission à plusieurs étages selon la revendication 42, **caractérisée en ce que** le démarrage du véhicule automobile a lieu dans le sens de conduite vers l'avant et vers l'arrière au moyen du même élément de commutation interne à la transmission, notamment au moyen du premier ou du deuxième élément de commutation (A, B).

44. Transmission à plusieurs étages selon l'une quelconque des revendications précédentes, **caractérisée en ce qu'**entre le moteur d'entraînement et la transmission est disposé un amortisseur d'oscillations de torsion.

45. Transmission à plusieurs étages selon l'une quelconque des revendications précédentes, **caractérisée en ce que** sur chaque arbre (AN, AB, 1, 2, 3, 4, 5, 6, 7, 8) de la transmission peut être monté un frein sans usure ou une prise de force auxiliaire pour l'entraînement d'unités supplémentaires ou une machine électrique servant de générateur et/ou de machine d'entraînement supplémentaire.

46. Transmission à plusieurs étages selon l'une quelconque des revendications précédentes, **caractérisée en ce que** l'on prévoit comme éléments de commutation (A, B, C, D, E) des embrayages à friction ou des freins à friction, en particulier des embrayages à disques, des freins à ruban et/ou des embrayages coniques, et/ou des embrayages par engagement par correspondance géométrique ou des freins par engagement par correspondance géométrique, en particulier des embrayages coniques et/ou des embrayage à griffes.
